(19) Europäisches Patentamt
European Patent Office
Office européen des brevets

(11) **EP 3 046 059 A1**

(12) **EUROPÄISCHE PATENTANMELDUNG**

(43) Veröffentlichungstag:
**20.07.2016  Patentblatt 2016/29**

(51) Int Cl.:
**G06Q 10/06** (2012.01)          **G06F 17/30** (2006.01)

(21) Anmeldenummer: **15151095.5**

(22) Anmeldetag: **14.01.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bischoff, Stefan**
**81679 München (DE)**

(72) Erfinder: **Bischoff, Stefan**
**81679 München (DE)**

(74) Vertreter: **Wegner, Hans**
**Bardehle Pagenberg Partnerschaft mbB**
**Patentanwälte, Rechtsanwälte**
**Prinzregentenplatz 7**
**81675 München (DE)**

(54) **Optimierte Suche und Speicherung von Stellenausschreibungen und Stellengesuchen in Jobbörsen**

(57)    Die vorliegende Erfindung betrifft ein Server-System (100) zum Durchsuchen von Stellenausschreibungen und / oder Stellengesuchen, aufweisend eine Schnittstelle zum Empfangen zumindest einer Suchanfrage von zumindest einem Benutzerendgerät (101), wobei die zumindest eine Suchanfrage in einem strukturierten Format aufgebaut ist, welches zumindest einen logischen Operator aufweist und alle für ein Durchsuchen der Stellenausschreibungen und / oder Stellengesuche notwendigen Informationen in einer einzigen Zeichenkette enthält und zumindest ein Speichersystem zum Speichern der Stellenausschreibungen und / oder Stellengesuche in einem strukturierten Format, sodass das strukturierte Format der zumindest einen Suchanfrage direkt auf das strukturierte Format der Stellenausschreibungen und / oder Stellengesuche abgebildet werden kann.

Fig. 11

EP 3 046 059 A1

**Beschreibung**

**1. Technisches Gebiet**

Die vorliegende Erfindung bezieht sich auf Verfahren und Systeme zur effizienten Ausgestaltung der Suche und Speicherung von Stellengesuchen und / oder Stellenausschreibungen in Jobbörsen, welche bevorzugt Online-Jobportale sind.

**2. Technischer Hintergrund**

Der Arbeitsmarkt hat sich in den letzten Jahren zusehends verändert. Während Arbeitnehmer früher häufig ihr gesamtes Berufsleben in ein und derselben Firma verbracht haben, wechseln heutzutage Arbeitnehmer immer häufiger das Unternehmen. Das Ausschreiben von Stellengesuchen von Arbeitnehmern bzw. das Platzieren von Stellenausschreibungen von Firmen wird verstärkt von Personalberatungsfirmen, Jobvermittlungsagenturen und sog. *Headhuntern* durchgeführt. Zur einfachen und effizienten Distribution der enorm gestiegenen Anzahl an Stellengesuchen und Stellenausschreibungen werden heutzutage verstärkt Online-Jobportale oder Online-Jobbörse genutzt, welche ein großes Zielpublikum erreichen. Sowohl Personalberatungs- und - vermittlungsfirmen, Unternehmen und Arbeitssuchende bzw. Job-Wechselwillige nutzen diese Online-Dienste verstärkt.

Bekannte Jobbörsen, wie z.B. monster.de oder stepstone.de bieten Suchoptionen an, die a) auf Basis einer Volltextsuche und b) optional mit Feldern wie Branche, Region, Ort und ähnlichen ausgestattet sind. Die Ergebnisse sind auf Masse ausgerichtet, wo ein Suchwort im gesamten Anzeigentext einer Anzeige gesucht wird. Es ist z.B. nicht möglich einen Beruf X mit 10 Jahren Erfahrung zu suchen. Heutige Portale zeigen viele Ergebnisse, die Qualität der Ergebnisse steht dabei nicht im Vordergrund. Die technischen und logischen Möglichkeiten, die ein Anwender (z.B. ein Arbeitssuchender oder eine Personalberatungsfirma) hat, lassen wenig Möglichkeiten einer adäquaten Charakterisierung des Anforderungsprofiles zu.

Ein Stellengesuch - beispielsweise eines Bankkaufmanns - könnte beinhalten, dass der Arbeitssuchende in *München* wohnt, aber in Zukunft gerne in *Berlin* als *Bankkaufmann* arbeiten will. Sucht nun eine Personalvermittlungsfirma mit den Suchbegriffen *Bankkaufmann* und *München* - und will damit Bankkaufleute ausfindig machen, die in München arbeiten wollen -, so würde auch das obige Beispiel-Stellengesuch bei einer Volltextsuche als Ergebnis gelistet werden (obwohl der Stellensuchende in Berlin Arbeit sucht), da das Stellengesuch eben auch das Wort *München* enthält. Dies führt dazu, dass sowohl Arbeitssuchende bzw. Job-Wechselwillige als auch Personalvermittlungsfirmen die gefundenen Stellenausschreibungen und Stellengesuche vollständig lesen müssen, um überprüfen zu können, ob der Arbeitssuchende bzw. der Job-Wechselwillige bzw. deren Profile dem Anforderungsprofil entspricht. Aufgrund der Vielzahl an Ergebnissen einer Suche, verursacht durch die enorm hohe Anzahl an Stellenausschreibungen und Stellengesuchen des modernen Arbeitsmarktes, ist das manuelle Durcharbeiten der Ergebnisse einer Suche zeitaufwendig. Oftmals können gar nicht alle Ergebnisse ausführlich gesichtet werden, sodass potentiell passende Arbeitssuchende bzw. Job-Wechselwillige (kurz: Kandidaten oder Bewerber) bzw. Stellenausschreibungen gar nicht berücksichtigt werden.

Zudem erschwert die große Anzahl an Stellengesuchen das Erstellen von Stellenausschreibungen derart, dass eine Abstimmung einer Stellenausschreibung auf bereits vorhandene Stellengesuche kaum möglich ist. Dies führt dazu, dass potentiell passende Stellengesuche nicht mit der Stellenausschreibung übereinstimmen, und somit der Arbeitssuchende bzw. der Job-Wechselwillige und der Ausschreibende (z.B. ein Unternehmen oder eine Personalberatungsfirma) nicht in Kontakt kommen.

Der vorliegenden Erfindung liegt daher das Problem zugrunde, eine verbesserte Lösung zum Suchen und Speichern von Stellengesuchen und Stellenausschreibungen zur Verfügung zu stellen, sodass die Suche effizienter gestaltet werden kann und zeitgleich die aufgefundenen Ergebnisse qualitativ verbessert werden, indem sie bereits beim Erstellen verbessert auf gesuchte Anforderungsprofile abgestimmt werden können.

**3. Zusammenfassung der Erfindung**

Dieses Problem wird durch die unabhängigen Ansprüche gelöst. In einem Ausführungsbeispiel betrifft die vorliegende Erfindung ein Server-System zum Durchsuchen von Stellenausschreibungen und / oder Stellengesuchen, aufweisend (a) eine Schnittstelle zum Empfangen zumindest einer Suchanfrage von zumindest einem Benutzerendgerät, wobei die zumindest eine Suchanfrage in einem strukturierten Format aufgebaut ist, welches zumindest einen logischen Operator aufweist und alle für ein Durchsuchen der Stellenausschreibungen und / oder Stellengesuche notwendigen Informationen in einer einzigen Zeichenkette enthält und (b) zumindest ein Speichersystem zum Speichern der Stellenausschreibungen und / oder Stellengesuche in einem strukturierten Format, sodass das strukturierte Format der zumindest einen Suchanfrage direkt auf das strukturierte Format der Stellenausschreibungen und / oder Stellengesuche abgebildet werden kann.

Diese vorteilhafte Ausgestaltung ermöglicht eine verbesserte Abbildung von Suchanfragen auf Stellenausschreibungen bzw. auf Stellengesuche. Durch Vorgabe eines strukturierten Formats zur Speicherung von Stellengesuchen bzw. Stellenausschreibungen, in welchem einzelne Kriterien, wie Beruf, gewünschter Arbeitsort und Qualifikationen etc. strukturiert gespeichert werden, verbessert die Auffindbarkeit der Stellengesuche und Stellenausschreibungen enorm. Erreicht wird dies, indem die Informationen einer Suchanfrage gezielt auf Informationen der Stellenausschreibungen bzw. der Stellgesuche abgebildet werden.

Die Suchanfrage, die bevorzugt in Form einer Kurznachricht (z.B. SMS, Messenger-Nachricht etc.) verfasst werden kann, folgt dabei einem Format, welches einzelne Kriterien in dafür vorgesehenen Feldern vorhält (z.B. Beruf = Bankkaufmann; Arbeitsort = München; Wohnort = Berlin; Berufserfahrung = >5 Jahre). Das gespeicherte Stellengesuch bzw. die gespeicherte Stellenausschreibung wird in einem korrespondierenden Format gespeichert. Bei der Suche selbst werden dann die einzelnen Felder direkt aufeinander abgebildet und durchsucht. Eine dem obigen Beispiel entsprechende Suchanfrage würde somit nur Bankkaufmänner, die in München arbeiten, auffinden. Gesuche, in welchen München als Wohnort angegeben ist, würden nicht gelistet werden. Durch solch eine Strukturierung der gespeicherten Stellengesuche und Stellenausschreibungen und der Suchanfragen selbst wird die Qualität der Suchergebnisse deutlich verbessert.

Die Speicherung aller Angaben in einer einzigen Zeichenkette vereinfacht ferner die Übertragung der Suchanfragen und / oder der Stellengesuche und / oder der Stellenausschreibungen, da die Datenmenge deutlich reduziert wird. Beispielsweise kann somit auf die Kodierung von Zeilenumbrüchen gänzlich verzichtet werden und eine maschinelle Verarbeitung dadurch vereinfacht und beschleunigt werden.

Eine strukturierte Speicherung wird beispielsweise durch Speicherung der Stellenausschreibungen und / oder Stellengesuchen in einer NoSQL-Datenbank erreicht. Eine solche Datenbank eignet sich besonders zur Speicherung von Datensätzen, die nicht immer alle Kriterien zwingend beinhalten müssen. Beispielsweise könnte eine erste Stellenausschreibung folgendermaßen strukturiert aufgebaut sein:

(1) "Beruf": "Bankkaufmann"; "Arbeitsort": "München"; "Qualifikationen": ["Beratung"]

Eine zweite Stellenausschreibung könnte wie folgt strukturiert aufgebaut sein:

(2) "Beruf": "Bankkaufmann"; "Arbeitsort": "München"; "Qualifikationen": ["Beratung", "Finanzierung", "Aktien"]

Der wesentliche Unterscheid der beiden Stellenausschreibungen (1) und (2) liegt in der Anzahl an aufgeführten Qualifikationen. Eine derartige Variation kann in herkömmlichen SQL-Datenbanken zu Leistungsproblemen führen, da diese beispielsweise durch rechenintensive sog. *Joins* realisiert werden müssen. Im Gegensatz dazu speichert eine NoSQL-Datenbank, unabhängig von den Variationen der Qualifikationen, die einzelnen Stellenausschreibungen vorteilhaft als einzelne vollständige Einträge und ermöglicht dadurch ein effizientes Auffinden z.B. mittels dem Fachmann bekannten *Reduce*-Verfahrens. Das strukturierte Schlüssel-Wert-basierte Format (Beispiel: Schlüssel = Beruf; Wert = Bankkaufmann) wird dabei stets beibehalten. Das durchsuchen der Datenbank wird somit hinsichtlich der Rechenleistung signifikant verbessert da aufwendige *Joins* vermieden werden. Zudem wird eine Erweiterung, d.h. das Einführen neuer Schlüssel, deutlich vereinfacht, da diese sich nicht im Aufbau der Datenbank wiedergespiegelt sind.

Vorzugsweise weisen die zumindest eine Suchanfrage und / oder die Stellenausschreibungen und / oder die Stellengesuche einen Wissensschlüssel zum Definieren von zumindest einer Berufsangabe und / oder einen Signatur-Code zum Definieren von zumindest einer bildungsrelevanten Angabe auf. Der Wissensschlüssel beinhaltet dabei vorzugsweise Angaben zum Beruf (z.B. Maler, Programmierer oder Friseur etc.). Der Signatur-Code ist auf bildungsrelevante Daten ausgerichtet und enthält vorzugsweise Angaben über Ausbildung, Weiterbildungen und Referenzen etc. Eine Unterteilung in einen Wissensschlüssel und einen Signatur-Code verbessert vorteilhaft die Effizienz einer Suche. So kann beispielsweise nur nach Kriterien der Signatur-Codes gesucht werden, während Angaben des Wissensschlüssels vernachlässigt werden. Durch die Reduktion der Suchkriterien können Suchanfragen effizienter durchgeführt werden, was z.B. die Systemlast des zugrunde liegenden Server-Systems vorteilhaft reduziert.

Vorzugsweise bildet der Signatur-Code eine Mehrzahl von bildungsrelevanten Angaben auf einen einzigen Wert ab. Durch die Abbildung mehrerer oder aller bildungsrelevanter Angaben des Signatur-Codes auf einen einzigen Wert, der z.B. eine alphanumerische Zeichenkette ist, wird die Größe der Suchanfrage und / oder Stellengesuche und / oder der Stellenausschreibungen deutlich reduziert, was zu einer vorteilhaften Einsparung von zu übermittelnden Daten an das Server-System führt. Zusätzlich wird dadurch auch die Suche an sich effizienter ausgestaltet, da nun nicht mehr mehrere Kriterien miteinander verglichen werden müssen, sondern lediglich ein einziger Wert. Möglich ist z.B. das jede einzelne Wertekombination von bildungsrelevanten Angaben einem eindeutigen Wert zugeordnet wird. Die Zuordnung ist in dem Server-System hinterlegt, um davon ausgehend die ursprüngliche Wertekombination wiederherstellen zu können.

Vorzugsweise ist der Signatur-Code in dem Wissensschlüssel enthalten. Eine derartige Kombination vereinfacht die Übertragung einer Suchanfrage und / oder eines Stellengesuchs und / oder einer Stellenausschreibung an das Server-System bzw. deren Speicherung, da alle Informationen mittels nur eines Aufrufs übermittelt werden können. Dies führt zu einer reduzierten Menge an zu verarbeitenden Aufrufen, was die Systemlast merklich reduziert. Auch im Hinblick auf den Einsatz von NoSQL-Datenbanken stellt dieser integrierte Aufbau einen wesentlichen Vorteil dar, da somit lediglich ein einziger Eintrag in einer NoSQL-Datenbank erzeugt werden muss.

Vorzugsweise weist das Speichersystem ferner einen geschützten Speicher zum Speichern von persönlichen Daten und einen öffentlichen Speicher zum Speichern von berufsbezogenen Daten auf. Somit ist es möglich, die (aus Vertraulichkeitsgründen unkritischen) berufsbezogenen Daten einzusehen, die (vertraulichen) persönlichen Daten beispielsweise eines Bewerbers (z.B. Name, Adresse) selektiv vertraulich zu behandeln. Denkbar ist beispielsweise auch, dass alle Daten in dem geschützten Bereich gespeichert sind und ein Teil dieser Daten entpersonifiziert dem öffentlichen Speicher zugeführt werden. Hierbei kann die Spiegelung der Daten von dem geschützten Bereich in den öffentlichen Bereich in Echtzeit geschehen.

Die Schnittstelle des Server-Systems ist dabei bevorzugt eingerichtet, um in Antwort auf die empfangene zumindest eine Suchanfrage die berufsbezogenen Daten passender Stellenausschreibungen und / oder passender Stellengesuche auszugeben und die persönlichen Daten der Stellenausschreibungen und / oder Stellengesuche aus dem geschützten Speicher erst auszugeben, wenn eine Autorisierung durchgeführt wurde. Die persönlichen Daten beinhalten bevorzugt persönliche Angaben wie Name und Adresse des ausschreibenden Unternehmens bzw. des Arbeitssuchenden. Die berufsbezogenen Daten beinhalten dabei Angaben zur Stelle (wie z.B. Beruf oder Berufserfahrung). Eine derartige Ausgestaltung des Server-Systems ermöglicht es einem Benutzer, beispielsweise eine Stellenausschreibung zu verfassen, und während des Verfassens direkt mögliche passende Stellengesuche angezeigt zu bekommen, aber ohne dabei Einsicht in die persönlichen Daten zu erlangen. Die Stellenausschreibung kann dann von dem Benutzer entsprechend iterativ verbessert werden, z.B. durch Änderung diverser Kriterien, um so mit einer größeren Anzahl an Stellengesuchen übereinzustimmen. Erst nach einer Autorisierung werden dann die persönlichen Daten sichtbar. Somit wird durch das Server-System gewährleistet, dass das Einstellen einer z.B. kostenpflichtigen Stellenausschreibung auch die gewünschten guten Ergebnisse liefert. Auch im Hinblick auf Datenschutz ist diese Ausgestaltung vorteilhaft, da nur kontrolliert Zugriff auf sensible persönliche Daten gestattet wird.

Die vorliegende Erfindung stellt ferner ein Benutzerendgerät bereit zum Durchsuchen von Stellenausschreibungen und / oder Stellengesuchen, aufweisend (a) eine grafische Oberfläche zum Erstellen zumindest einer Suchanfrage, wobei die zumindest eine Suchanfrage in einem strukturierten Format aufgebaut ist, welches zumindest einen logischen Operator aufweist und alle für ein Durchsuchen der Stellenausschreibungen und/oder Stellengesuche notwendigen Informationen in einer einzigen Zeichenkette enthält und (b) eine Schnittstelle zum Übermitteln der zumindest einen Suchanfrage an ein Server-System, vorzugsweise ein Server-System wie oben beschrieben.

Wie oben bereits beschrieben, ermöglicht diese vorteilhafte Ausgestaltung eine verbesserte Abbildung von Suchanfragen auf Stellenausschreibungen bzw. auf Stellengesuche was zu verbesserten Suchergebnissen im Vergleich zu herkömmlichen Volltextsuchen führt. Das entsprechende Benutzerendgerät kann dabei z.B. ein Smartphone, ein Laptop oder ein Computer etc. sein. Eine Erstellung der Stellengesuche und / oder Stellenausschreibungen mittels der grafischen Oberfläche ist ebenfalls möglich. Nach Erstellung werden diese zur Speicherung an das oben beschrieben Server-System übermittelt.

Vorzugsweise weist die grafische Oberfläche des Benutzerendgeräts zumindest ein Schlüssel-Wert-Feld zur Eingabe von Daten für einen Wissensschlüssel und / oder von Daten für einen Signatur-Code auf, wobei der Schlüssel des zumindest einen Schlüssel-Wert-Feldes durch Eingabe eines Schlüssels gebildet wird, wobei nach Eingabe eines oder mehrerer Zeichen ein entsprechender Schlüssel automatisch vorgeschlagen wird und / oder der Wert des zumindest einen Schlüssel-Wert-Feldes durch Eingabe eines Wertes gebildet wird, wobei nach Eingabe eines oder mehrerer Zeichen ein entsprechender Wert automatisch vorgeschlagen wird. Besonders auf mobilen Endgeräten, wie z.B. Smartphones, steht nur eine begrenzte Anzeigefläche - aufgrund des kleinen Bildschirms - zur Verfügung. Eine vollständige Anzeige aller möglichen Schlüssel-Wert-Felder führt dazu, dass die Darstellung für den Benutzer unübersichtlich wird. Aus diesem Grund stellt das Benutzerendgerät nicht von vornherein alle Schlüssel-Wert-Felder, die zur Eingabe der berufsangaben oder der bildungsrelevanten Angaben dienen, dar, sondern erlaubt ein dynamisches Wählen bzw. Konstruieren eben dieser Felder. Der Schlüssel, der die Feldart bestimmt, wird von einem Benutzer in einem dafür vorgesehenen Bereich auf der Anzeige eingegeben. Bereits nach der Eingabe von wenigen Buchstaben wird dem Benutzer durch das Benutzerendgerät automatisch ein entsprechender Schlüssel vorgeschlagen. Will der Benutzer beispielsweise seinen Beruf in das Benutzerendgerät eingeben, so würde er die Buchstaben BE in den dafür vorgesehenen Bereich eingeben. Anhand dieser Buchstabenkombination schlägt das Benutzerendgerät anschließend beispielsweise die Schlüssel *Beruf* und *Berufserfahrung* vor. Diese können nun, beispielsweise durch klicken, von dem Benutzer selektiert werden. Die Anzahl der einzugebenden Buchstaben kann dabei je nach Ausgestaltungsart variieren. Beispielsweise kann der Eingabe der Buchstaben eine Auswahl, ob mittels Wert oder Feld gesucht werden soll, vorgeschaltet sein. In diesem Fall kann beispielsweise die Suche mittels Feld als Standard voreingestellt sein.

Im Anschluss daran kann der Nutzer einen entsprechenden Wert, zugehörig zu dem Schlüssel, eingeben. Beispielsweise gibt der Nutzer wieder in einem dafür vorgesehenen Bereich die Buchstaben BA ein. Das Benutzerendgerät erkennt an dem zugehörigen Schlüssel - nämlich *Beruf* - welche Werte der Benutzer eingeben wollen könnte. Somit würde das Benutzerendgerät beispielsweise die Berufe *Bankkaufmann* und *Bankkauffrau* vorschlagen. Diese können wiederum durch den Benutzer mittels Klicken selektiert werden. Aufgrund der Kenntnis des Schlüssels kann das Benutzerendgerät aber auch ohne eine Benutzereingabe von Buchstaben bereits passende Begrifflichkeit vorschlagen, sodass eine Benutzung weiter optimiert und vereinfacht wird.

Eine derartig vorteilhafte Ausgestaltung des Benutzerendgeräts ermöglicht es, effizient auch auf kleinen Anzeigen eine Vielzahl von Eingabemöglichkeiten behandeln zu können. Der Inhalt der Anzeige lässt sich somit dynamisch für jeden einzelnen Anwendungsfall anpassen und optimieren. Dies führt unter anderem zu einer effizienteren Nutzung und zur Fehlervermeidung. Durch das automatische Vorschlagen von zugehörigen Begriffen werden z.B. Schreibfehler verhindert. Da die Werte der Schlüssel- Wert-Felder in Abhängigkeit von den Schlüsseln vorgeschlagen werden, lässt sich eine entsprechende Suchfunktion, also das Auffinden von passenden Begriffen durch das Benutzerendgerät, effizient und leistungsstark realisieren, da die zu durchsuchenden Menge anhand des Schlüssels reduziert wird.

Vorzugsweise wird die erstellte zumindest eine Suchanfrage ganz oder teilweise in dem Benutzerendgerät (101) gespeichert. Diese Ausgestaltung ist besonders vorteilhaft für Personalvermittlungsfirmen, da diese oftmals wiederholt identische Suchanfragen an ein Server-System, wie oben beschrieben, stellen müssen. Durch Speicherung können die Suchanfragen dann einfach erneut geladen und an ein Server-System wie oben beschrieben übermittelt werden. Auch müssen diese Firmen oftmals identische Stellengesuche oder Stellenausschreibungen in ein wie oben beschriebenes Server-System einstellen. Daher ist es auch denkbar, dass sowohl Stellengesuche und / oder Stellenausschreibungen zur späteren Verwendung gespeichert werden. Die Speicherung ganzer oder teilweiser Suchanfragen und / oder Stellenausschreibungen und / oder Stellengesuchen erlaubt ein effizienteres Durchführen diese Tätigkeiten und führt zu einer großen Zeitersparnis. Denkbar ist zudem eine Modifikation einer gespeicherten Suchanfrage bzw. eines Stellengesuchs und / oder einer Stellenausschreibung. Die oftmals benötigte Flexibilität - z.B. für sich nur leicht bzw. teilweise ändernde Suchanfragen bzw. Stellengesuche und / oder Stellenausschreibungen - wird hierdurch bereitgestellt.

Vorzugsweise werden während der Erstellung der zumindest einen Suchanfrage bereits Stellenausschreibungen und / oder Stellengesuche, passend zu bereits eingegebenen Angaben während der Erstellung der zumindest einen Suchanfrage angezeigt. Wird von einem Benutzer des Benutzerendgeräts eine Suchanfrage formuliert, so kann beispielsweise direkt nach Eingabe der ersten Angabe (z.B. gemäß der oben beschriebenen Schlüssel-Wert-Felder) die Suchanfrage an das wie oben spezifizierte Server-System übermittelt und eine entsprechende Antwort empfangen werden. Die Antwort umfasst dabei beispielsweise gefundene Stellengesuche. Dabei werden vorzugsweise aber die, wie oben beschrieben, geschützten Daten noch nicht wiedergegeben. Der Benutzer sieht aber umgehend die Anzahl an passenden Stellengesuchen hinsichtlich seiner Suchanfrage. Durch sukzessives Hinzufügen weiterer Angaben kann die Suchanfrage verbessert bzw. präzisiert werden. Nach jeder weiteren Angabe werden dem Benutzer die Suchergebnissen in der oben beschriebenen Form dargestellt. Somit kann der Benutzer seine Suchanfrage iterativ verbessern. Möglich ist auch eine Änderung bereits getätigter Eingaben zur Verbesserung der Suchanfrage.

Dasselbe Prinzip kann für das Formulieren von Stellengesuchen und / oder Stellenausschreibungen angewendet werden. Einer Personalfirma wird es damit ermöglicht, z.B. während dem Formulieren einer Stellenausschreibung, direkt auf die Marktlage hinsichtlich eingestellter Stellengesuche zu reagieren und die Stellenausschreibung entsprechend anzupassen, um eine möglichst große Zielgruppe damit erreichen zu können.

Ein weiterer Aspekt der Erfindung betrifft ein System zum Durchsuchen von Stellenausschreibungen und / oder Stellengesuchen, aufweisend ein Server-System wie oben beschrieben und zumindest ein Benutzerendgerät wie oben beschrieben.

Ein weiterer Aspekt der Erfindung betrifft ein Verfahren zum Betrieb eines Server-Systems wie oben beschrieben.

Ein weiterer Aspekt der Erfindung betrifft ein Verfahren zum Betrieb eines Benutzerendgeräts wie oben beschrieben.

Ein weiterer Aspekt der vorliegenden Erfindung betrifft ein Computerprogramm, aufweisend Instruktionen zur Ausführung der beiden zuvor beschriebenen Verfahren. Dabei können die Verfahren als ein bzw. getrennt als zwei Computerprogramme betrieben werden.

Weitere bevorzugte Ausführungsformen der vorliegenden Erfindung sind in den abhängigen Ansprüchen angegeben.

## 4. Beschreibung der Zeichnungen

Im Folgenden werden bevorzugte Ausführungsbeispiele der vorliegenden Erfindung unter Bezugnahme auf die begleitenden Figuren erläutert:

Fig. 1: Schematische Darstellung des Ablaufs des Einstellens einer Stellenausschreibung einer Firma gemäß dem Stand der Technik;

Fig. 2: Schematische Darstellung des Ablaufs des Einstellens einer Stellenausschreibung einer Firma gemäß einem Ausführungsbeispiel der Erfindung;

Fig. 3a: Schematische Darstellung des Ablaufs einer Suche durch eine Personalvermittlungsfirma gemäß einem Ausführungsbeispiel der Erfindung;

Fig. 3b: Schematische Darstellung des Ablaufs einer Suche und Kontaktaufnahme per E-Mail durch eine Personalvermittlungsfirma gemäß einem Ausführungsbeispiel der Erfindung;

Fig. 3c: Detaillierte Darstellung des ersten Teils der Suche einer Firma nach passenden Kandidaten gemäß einem Ausführungsbeispiel der Erfindung;

Fig. 3d: Detaillierte Darstellung des zweiten Teils der Suche einer Firma nach passenden Kandidaten gemäß einem Ausführungsbeispiel der Erfindung;

Fig. 3e: Detaillierte Darstellung der Abläufe der Figuren 3c und 3d aus Sicht eines Arbeitssuchenden gemäß einem Ausführungsbeispiel der Erfindung;

Fig. 3f: Aufbau einer Stellenanzeige gemäß einem Ausführungsbeispiel der Erfindung;

Fig. 4: Schematische Darstellung des Ablaufs einer Stellensuche durch einen Arbeitssuchenden gemäß einem Ausführungsbeispiel der Erfindung;

Fig. 5a: Unterteilung in geschützte und öffentliche Daten gemäß einem Ausführungsbeispiel der Erfindung;

Fig. 5b: Angaben erfassen, Erstellen und Durchführen einer Suchanfrage gemäß einem Ausführungsbeispiel der Erfindung;

Fig. 6: Datenstruktur gemäß einem Ausführungsbeispiel der Erfindung;

Fig. 7: Darstellung von Schlüssel-Wert-Feldern auf einer Anzeige gemäß einem Ausführungsbeispiel der Erfindung;

Fig. 8a-b: Eingabe eines Schlüssels eines Schlüssel-Wert-Feldes gemäß einem Ausführungsbeispiel der Erfindung;

Fig. 9a-b: Eingabe eines Wertes eines Schlüssel-Wert-Feldes gemäß einem Ausführungsbeispiel der Erfindung;

Fig. 10: Architektur des Gesamtsystems gemäß einem Ausführungsbeispiel der Erfindung;

Fig. 11: Schematischer Aufbau des Gesamtsystems gemäß einem Ausführungsbeispiel der Erfindung;

Fig. 12: Implementierungsbeispiel gemäß der vorliegenden Erfindung;

Fig. 13: Beispielsuchergebnis gemäß dem Implementierungsbeispiel der Fig. 12 der vorliegenden Erfindung;

Fig. 14: Implementierungsbeispiel der Veröffentlichung einer Stelleanzeige gemäß dem Implementierungsbeispiel der Fig. 12 der vorliegenden Erfindung;

Fig. 15: Implementierungsbeispiel eines Cockpits gemäß dem Implementierungsbeispiel der Fig. 12 der vorliegenden Erfindung;

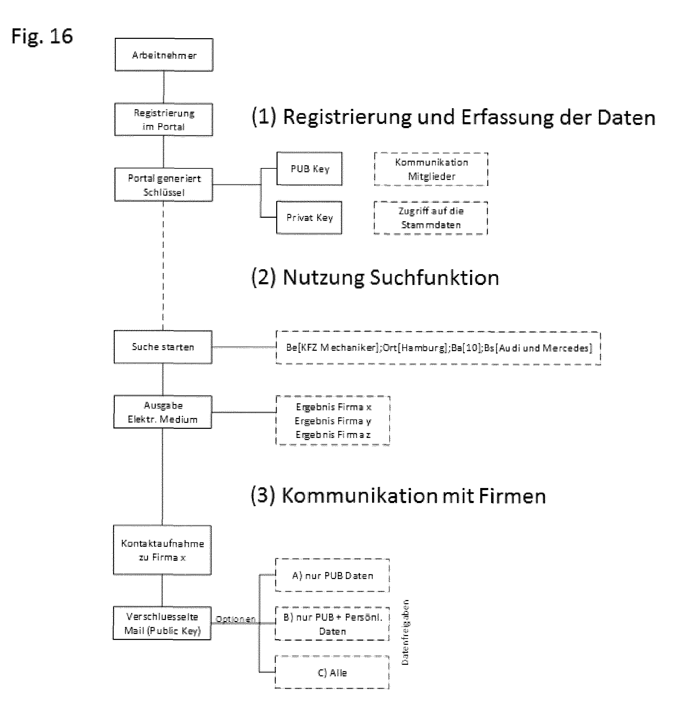

Fig. 16: Freigabe von Daten eines Arbeitnehmers gemäß einem Implementierungsbeispiel der vorliegenden Erfindung;

**5. Beschreibung bevorzugter Ausführungsformen**

Nachfolgend werden Aspekte der vorliegenden Erfindung im Kontext bevorzugter Ausführungsformen unter Bezugnahme auf die oben genannten Zeichnungen beschrieben.

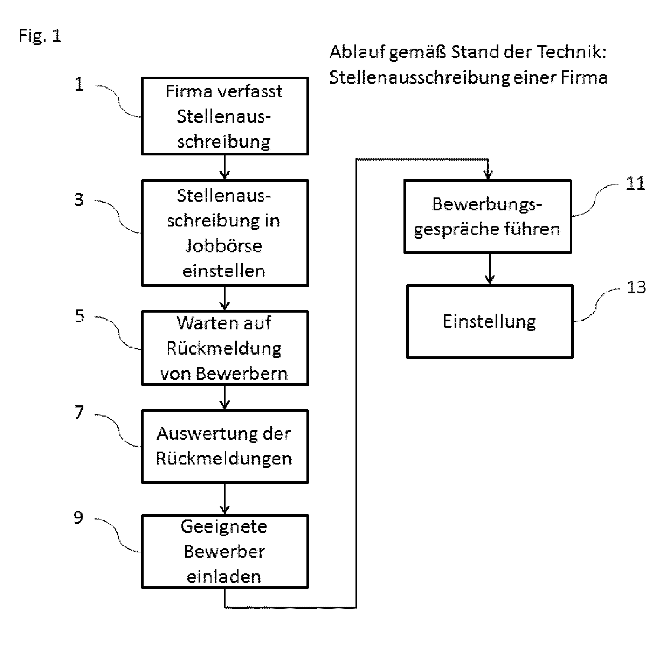

Fig. 1 zeigt schematisch den Ablauf des Einstellens einer Stellenausschreibung in eine Online-Jobbörse gemäß dem Stand der Technik. In Schritt 1 verfasst dabei eine Firma, z.B. eine Personalvermittlungsfirma oder ähnliches, eine Stellenausschreibung in Volltext. In Schritt 3 stellt die Firma die Stellenausschreibung in eine Online-Jobbörse ein. In Schritt 5 warte die Firma auf Rückmeldung von potentiellen Bewerbern. Entsprechende Rückmeldungen werden durch die Firma gesammelt. Ist eine ausreichende Menge an Rückmeldungen eingegangen, so wertet die Firma in Schritt 7 die Rückmeldungen nach gewissen Kriterien aus. Geeignete Bewerber bzw. Kandidaten werden in Schritt 9 dann zu Bewerbungsgesprächen eingeladen. Nach den in Schritt 11 geführten Bewerbungsgesprächen wählt die Firma einen passenden Kandidaten aus und stellt diesen ggf. in Schritt 13 ein.

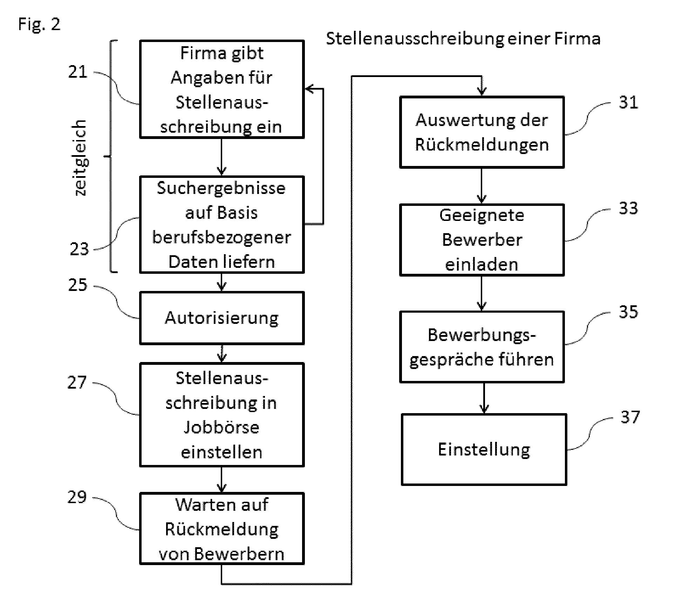

Fig. 2 zeigt gemäß einem Ausführungsbeispiel der vorliegenden Erfindung den Ablauf des Einstellens einer Stellenausschreibung durch eine Firma in ein System gemäß einem Ausführungsbeispiel der vorliegenden Erfindung. In Schritt 21 erstellt die Firma eine Stellenausschreibung basierend auf dem erfindungsgemäßen Format, wie oben beschrieben. Eine Stellenausschreibung in Volltext kann dabei zusätzlich angefügt werden. Bereits nach der Eingabe einer Angabe, z.B. mittels der oben beschriebenen Schlüssel-Wert-Felder, werden in Schritt 23 passende Suchergebnisse zurückgeliefert. Anschließend kann durch Zurückkehren zu Schritt 21 die Suchanfrage durch Hinzufügen weiterer Angaben verfeinert werden, dabei kann der Zyklus zwischen Schritt 21 und 23 theoretisch beliebig oft durchlaufen werden. Die zurückgelieferten Suchergebnisse liefern aber bevorzugt nur berufsbezogene Daten. Die Firma bzw. der Benutzer kann noch keine persönlichen Daten, wie z.B. Namen und Adresse von potentiellen Bewerbern einsehen. Erst nach einer Autorisierung in Schritt 25 werden die persönlichen Daten (auch geschützte Daten genannt) für den Benutzer bzw. die Firma sichtbar. Eine Autorisierung kann hier z.B. eine Bezahlung einer Gebühr, die Eingabe eines Passworts, die Freigabe durch einen Benutzer oder eine sonstige Autorisierung sein. Nach der Autorisierung wird in Schritt 27 die Stellenausschreibung automatisch in die Jobbörse eingestellt. Sodann wartet die Firma bzw. der Benutzer auf Rückmeldung von Bewerbern oder Kandidaten, die gesammelt und anschließend in Schritt 31 nach bestimmten Kriterien ausgewertet werden. Die Auswertungen werden im Allgemeinen durch die Firma oder den Benutzer selbst durchgeführt. Im Anschluss daran werden in Schritt 33 die geeigneten Bewerber eingeladen. Dies kann über das erfindungsgemäße System, z.B. durch übermitteln einer Mail-Nachricht an den Bewerber geschehen. Treffen die Bewerber bei der Firma ein, so wird in Schritt 35 mit Ihnen ein Bewerbungsgespräch geführt und anschließend in Schritt 37 ggf. ein passender Bewerber eingestellt.

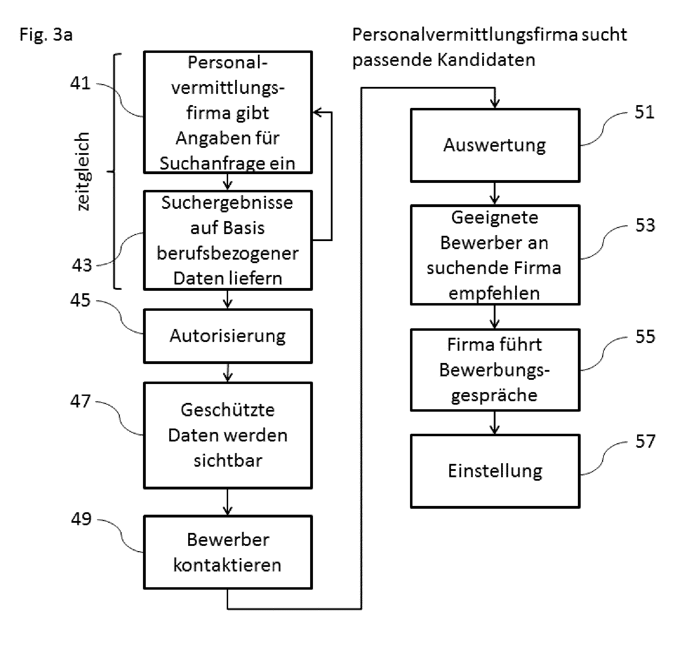

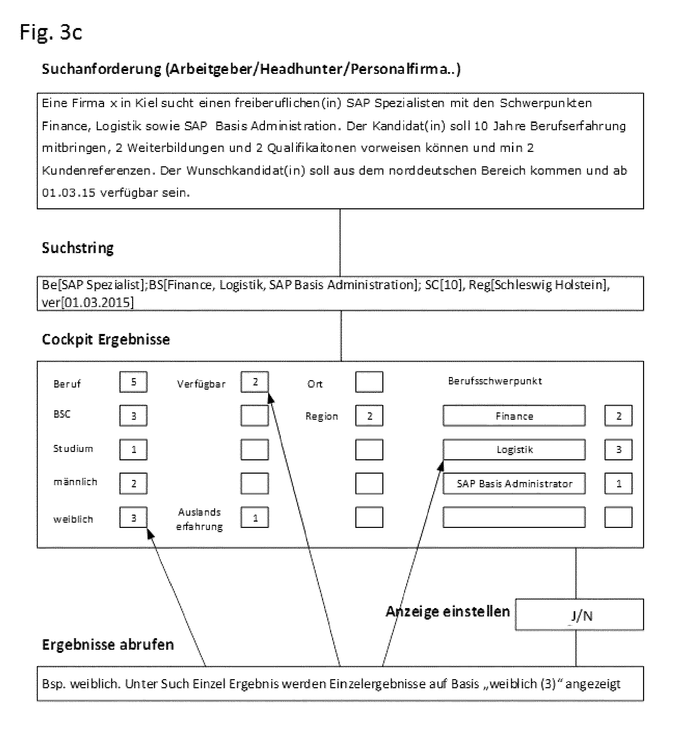

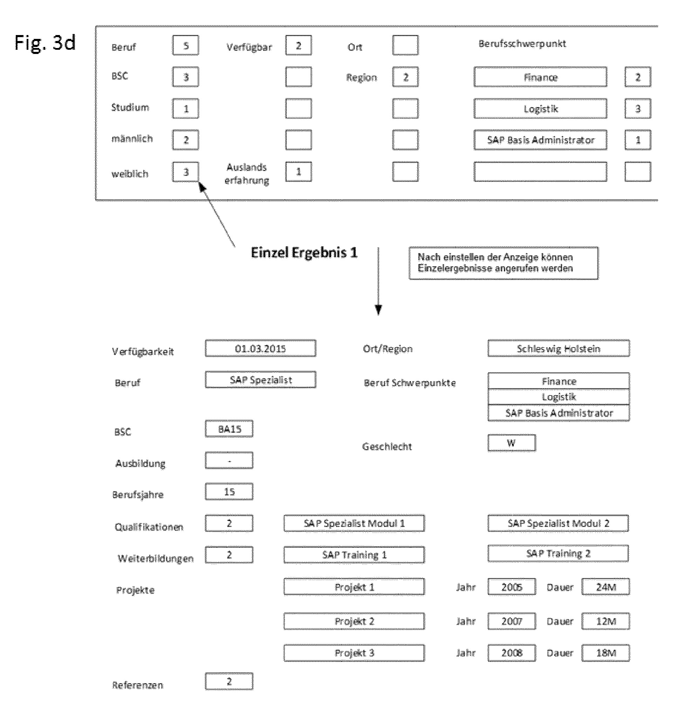

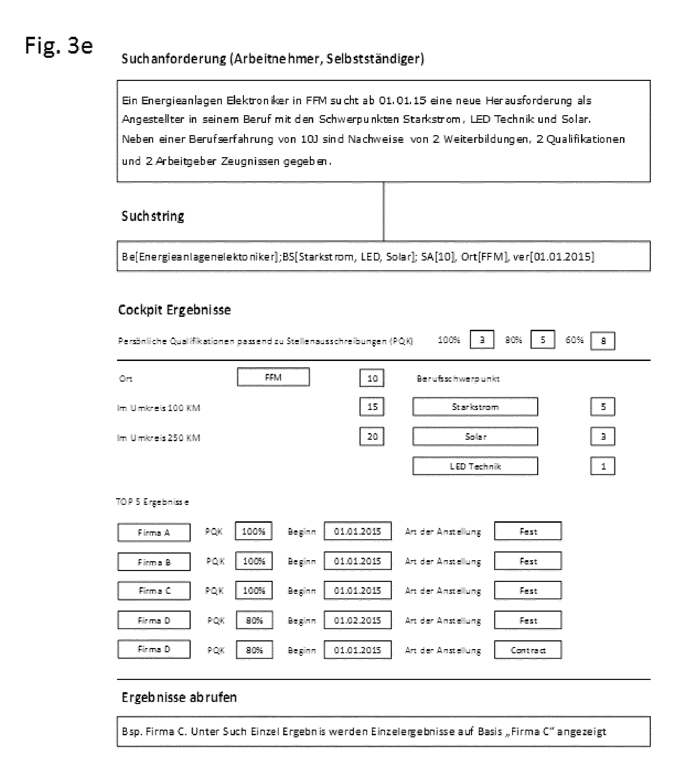

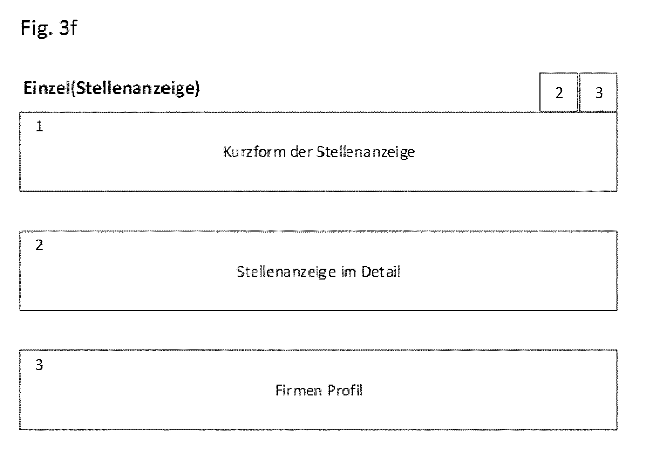

Fig. 3a zeigt gemäß einem Ausführungsbeispiel der vorliegenden Erfindung den Ablauf des Suchens von Stellengesuchen durch eine Personalberatungsfirma in einem System gemäß einem Ausführungsbeispiel der vorliegenden Erfindung. Dabei verfasst die Personalvermittlungsfirma in Schritt 41 eine Suchanfrage basierend auf dem oben beschriebenen Format. Bereits nach Eingabe der ersten Angabe werden der Personalvermittlungsfirma bzw. dem entsprechenden Benutzer Suchergebnisse in Schritt 43, passend zu der Angabe, zurückgeliefert. Daraufhin kann der Benutzer bzw. die Personalvermittlungsfirma zu Schritt 41 zurückkehren und die Suchanfrage sukzessive durch Eingabe weiterer Angaben verfeinern. Der Benutzer bzw. die Personalvermittlungsfirma kann theoretisch den Zyklus zwischen den Schritten 41 und 43 beliebig oft durchlaufen.

Die angezeigten Suchergebnisse enthalten aber, ähnlich zu dem vorher beschriebenen Beispiel, noch keine geschützten bzw. persönlichen Daten, sondern nur berufsbezogene Daten. Erst nach einer Autorisierung in Schritt 45 werden die geschützten Daten in Schritt 47 sichtbar. Die Daten können direkt von der Personalvermittlungsfirma ausgewertet bzw. verwertet werden, so dass die Personalvermittlungsfirma in Schritt 49 die Kandidaten kontaktieren kann. Durch die Kontaktaufnahme gesammelten Daten können durch die Personal Firma in Schritt 51 ausgewertet werden, um geeignete Bewerber einer Firma in Schritt 53 empfehlen zu können. Im Anschluss daran führt die Firma Bewerbungsgespräche in Schritt 55 mit geeigneten Bewerbern durch und stellt ggf. einen passenden Bewerber in Schritt 57 ein.

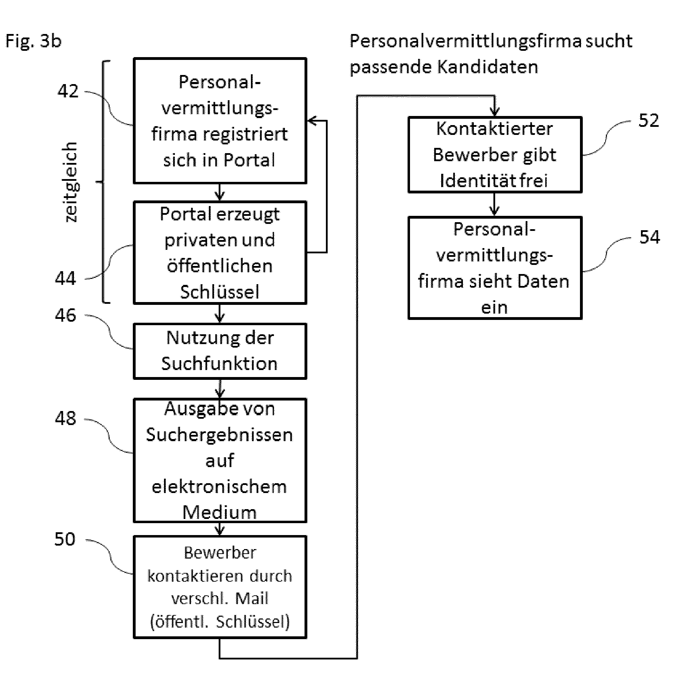

Fig. 3b zeigt gemäß einem Ausführungsbeispiel der vorliegenden Erfindung den Ablauf des Suchens von Stellengesuchen und das Kontaktieren eines Bewerbers per E-Mail durch eine Personalberatungsfirma zur Autorisierung der Dateneinsicht in einem System gemäß einem Ausführungsbeispiel der vorliegenden Erfindung. Eine Personalvermittlungsfirma registriert sich dabei in Schritt 42 in dem erfindungsgemäßen System, beispielsweise durch Hinterlegung der Stammdaten und eines Vorstellungstextes. Die Stammdaten und der Vorstellungstext können bei einer Stellenausschreibung angefügt werden. Durch die Registrierung werden in Schritt 44 zwei Schlüssel (ein privater und ein öffentlicher Schlüssel) erzeugt. Der öffentliche Schlüssel ermöglicht verschlüsselte Kommunikation innerhalb des Systems mit allen Mitgliedern. Der private Schlüssel dient zum verschlüsselten Speichern von geschützten Daten. Anschließend kann die Personalvermittlungsfirma die Suchfunktion des Systems in Schritt 46 nutzen. Die Nutzungsmöglichkeiten können abhängig von der Zugangsart (z.B. freier Zugang, kostenpflichtiger Profi-Zugang, oder kostenpflichtiger Maximaler Zugang) variieren. Nach der Suche werden Suchergebnisse in Schritt 48 angezeigt, z.B. auf einem elektronischen Medium ausgegeben. Hierbei können geschützte Daten noch nicht von der Personalfirma eingesehen werden. Um dies zu ermöglichen, wird ein Bewerber, übereinstimmend mit dem Suchergebnis, durch das System in Schritt 50 mittels verschlüsselter E-Mail kontaktiert. Daraufhin kann der Bewerber in Schritt 52 seine Identität freigeben. Zum Beispiel wird durch eine Autorisierung der Zugang zu den geschützten Daten des Bewerbers freigegeben, sodass diese in Schritt 54 durch die Personalvermittlungsfirma eingesehen werden können. Die freigegebenen geschützten Daten können nur z.B. durch die Personalvermittlungsfirma genutzt werden, um mit dem Bewerber in Kontakt zu treten.

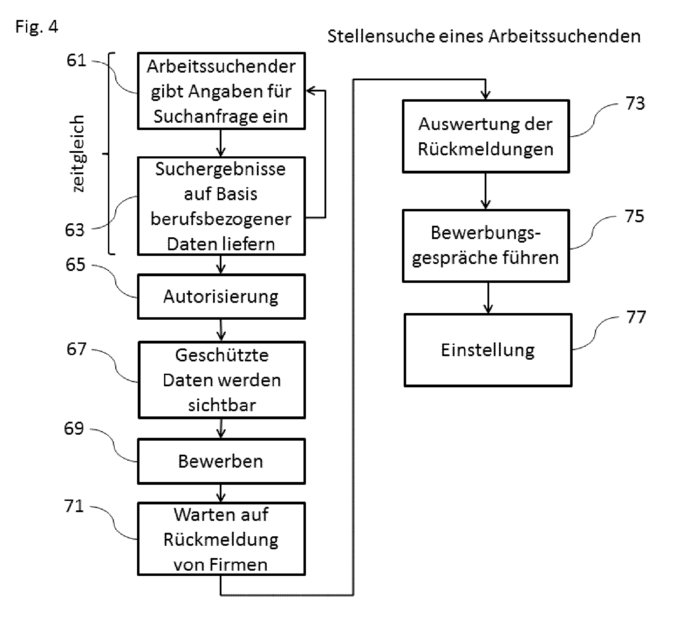

Fig. 4 zeigt gemäß einem Ausführungsbeispiel der vorliegenden Erfindung den Ablauf des Suchens von Stellengesuchen durch einen Arbeitssuchenden bzw. Job-Wechselwilligen in einem System gemäß einem Ausführungsbeispiel der vorliegenden Erfindung. In Schritt 61 verfasst ein Arbeitssuchender bzw. ein Job-Wechselwilliger eine Suchanfrage. Bereits beim Eingeben der ersten Angabe werden dem Arbeitssuchenden bzw. dem Job-Wechselwilligen entsprechende Suchergebnisse in Schritt 63 gelistet. Anschließend kann durch Zurückkehren zu Schritt 61 die Suchanfrage durch Hinzufügen weiterer Angaben verfeinert werden. Dabei kann der Zyklus zwischen Schritt 61 und 63 theoretisch beliebig oft durchlaufen werden. Zu beachten ist, dass in Schritt 63 keine geschützten Daten, wie z.B. Name oder Adresse der Firma, angezeigt werden. Erst nach einer Autorisierung in Schritt 65, die wie oben beschrieben z.B. eine Bezahlung einer Gebühr oder Ähnliches sein kann, werden dem Arbeitssuchenden bzw. dem Job-Wechselwilligen in Schritt 67 geschützte Daten angezeigt. Aufgrund dessen kann der Arbeitssuchende bzw. der Job-Wechselwillige sich in Schritt 69 bei entsprechenden Firmen bewerben, welche er durch seine Suchanfrage aufgefunden hat. Nach dem Bewerben wartet der Arbeitssuchender bzw. der Job-Wechselwillige in Schritt 71 auf Rückmeldung der einzelnen Firmen. In Schritt 73 wertet der Arbeitssuchender bzw. der Job-Wechselwillige Rückmeldungen der einzelnen Firmen aus und führt in Schritt 75 gegebenenfalls Bewerbungsgespräche mit den Firmen die eine positive Rückmeldung haben verlauten lassen. In Schritt 77 wird der Arbeitssuchender bzw. der Job-Wechselwillige ggf. von einer Firma eingestellt. Zu bemerken ist, dass die Schritte 65 und 67 optional sind und auch entfallen können. Grundsätzlich stehen also einem Arbeitssuchenden bzw. einem Job-Wechselwilligen die gleichen oder ähnliche Möglichkeiten für die Verwendung des Systems zur Verfügung einer beispielsweise einer Personalvermittlungsfirma. Daraus ergibt sich der Vorteil, dass einem Arbeitssuchenden bzw. einem Job-Wechselwilligen direkt alle Informationen über die ausschreibende Firma, die Anzeige und das Einstelldatum zur Verfügung stehen bzw. er diese angezeigt bekommt.

Die in den oben beschrieben Ausführungsbeispielen beschriebene Trennung in geschützte bzw. persönliche und berufsbezogene Daten dient zur Erhöhung der Sicherheit des Systems, z.B. im Hinblick auf Datenschutz. Nur autorisierte Benutzer erhalten Zugriff auf persönliche Daten.

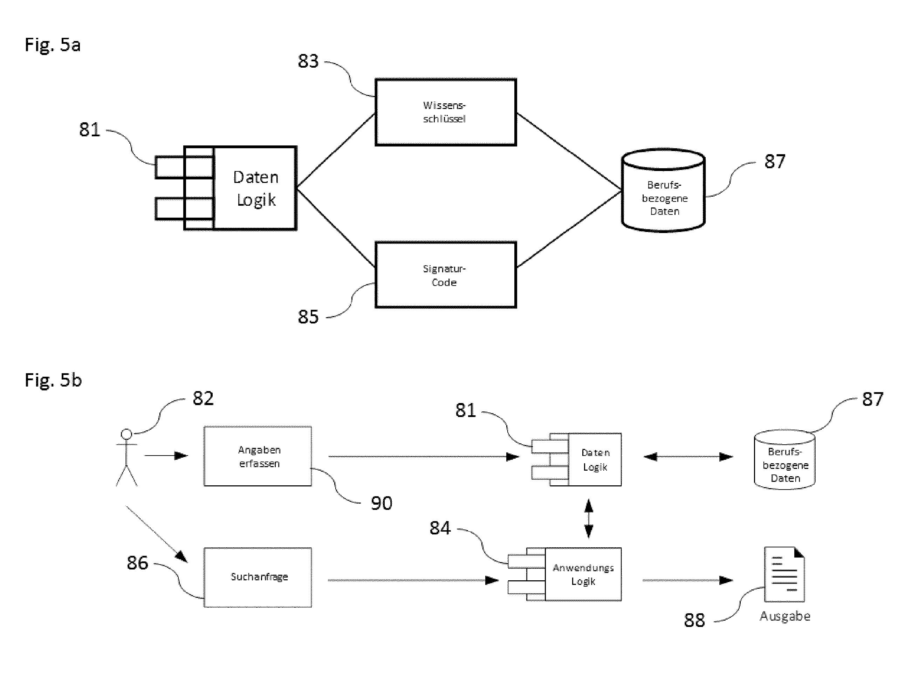

Fig. 5a zeigt die Unterteilung berufsbezogener Daten 87 gemäß einem Ausführungsbeispiel der vorliegenden Erfindung. Die Datenlogik 81, die dem Server-System 100 zugrunde liegt, unterteilt dabei zumindest Teile der berufsbezogenen Daten 87 in einen Wissensschlüssel 83 und einen Signaturcode 85. Zur vereinfachten Speicherung kann der Signaturcode 85 auch in dem Wissensschlüssel 83 enthalten sein. Beide können separat oder gemeinsam in Form einer einzigen Zeichenkette vorliegen.

Fig. 5b zeigt gemäß einem Ausführungsbeispiel der vorliegenden Erfindung, wie eine Suche durch einen Benutzer 82 durchgeführt wird und wie dieser Angaben in das System eingibt (z.B. Profildaten). Dabei gibt der Benutzer 82 im Vorgang 90 gewünschte Angaben ein. Teile der Daten werden durch die Datenlogik 81 den berufsbezogenen Daten 87 zugeführt, also z.B. in als öffentliche Daten gespeichert. Außerdem wird von der Datenlogik der Wissensschlüssel 83 und der Signatur-Code 85 erzeugt und ebenfalls als öffentliche Daten gespeichert. In Vorgang 86 wird eine Suchanfrage, welche auf einem Format basiert, in dem einzelne Kriterien mit logischen Operatoren verknüpft sind, von dem Benutzer 82 erstellt. Die Anwendungslogik 84 übermittelt die Suchanfrage nun an die Datenlogik 81, welche berufsbezogene Daten 87, gemäß der Suchanfrage, an die Anwendungslogik 84 zurückliefert. Die gefundenen Ergebnisse werden dem Benutzer 82 als Ausgabe 88 präsentiert. Eine Suchanfrage wird dabei bereits während des Verfassens über die Anwendungslogik 84 und die Datenlogik 81 verarbeitet, so dass nach Eingabe der ersten Angabe den Benutzer 82 Ergebnisse ausgegeben werden. Dies ermöglicht, dass der Benutzer 82 seine Suchanfrage iterativ und sukzessive durch Eingabe weiterer Angaben bzw. durch Anpassung bereits getätigte Angaben verbessern kann.

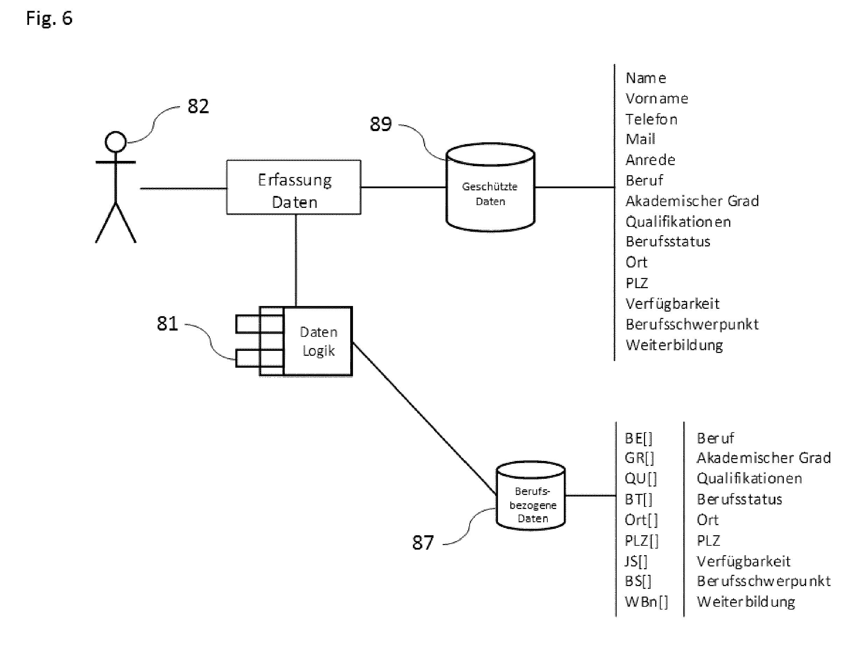

Fig. 6 zeigt gemäß einer Ausführungsform der vorliegenden Erfindung eine weitere Unterteilung der Daten. Wie bereits unter Bezugnahme auf Fig. 5a beschrieben wurde, sind berufsbezogene Daten 87 in einen Wissensschlüssel 83 und einen Signatur-Code 85 unterteilt. Neben den berufsbezogenen Daten 87 existieren geschützte persönliche Daten 89, die vorzugsweise persönliche Daten wie Name, Vorname, Telefon, Mail-Adresse und weitere Angaben enthalten. Die Daten können aber auch anderweitig unterteilt und dabei geschützt oder nicht geschützt sein.

**Tabelle 1**

| Feldkurzbezeichnung | Feld | Inhalt |
|---|---|---|
| keine | S1_anrede | Herr, Frau |
| keine | S1_name | Maier, Bischoff, Mustermann |
| keine | S1_vorname | Peter, Stefan, Max |

(fortgesetzt)

| Feldkurzbezeichnung | Feld | Inhalt |
|---|---|---|
| keine | S1_Telefon_priv | Telefon privat |
| keine | s1_GeburtsD | Geburtsdatum |
| keine | s1_str_priv | Private Anschrift |

Obige Tabelle 1 zeigt dabei beispielhaft eine Übersicht an möglichen Daten 89, die geschützt sein können. Kurzbezeichnungen für die Felder werden dabei nicht vergeben. Die zweite Spalte zeigt das Feld, die Spalte Inhalt die eigentlichen Daten.

Die berufsbezogenen Daten 87 enthalten dabei bevorzugt Angaben zum Beruf und über die Qualifikation.

**Tabelle 2**

| Feldkurzbezeichnung | Feld | Inhalt |
|---|---|---|
| Ort[] | S1_Ort | Berlin, München, Hamburg |
| plz[] | S1_PLZ | Postleitzahl |
| Gr[] | S1_akaGrad | Dr., Prof, Ingenieur |
| Be[] | S1_Beruf | Maler, Programmierer, Friseur |
| BS[] | S1_Berufsschwerpunkt | SAP, C++, Trendfrisuren |
| BT[] | E1_Berufsstatus | Berufsstatus (Angestellter,...) |
| QU[] | e5_Qualifikation_kurz | Qualifikation |
| WBn[] | E6_Weiterbildung | Weiterbildung |

Tabelle 2 zeigt dabei beispielhaft eine Übersicht an möglichen berufsbezogenen Daten 87. Die erste Spalte zeigt dabei die Feldkurzbezeichnung. Die zweite Spalte zeigt das Feld, die Spalte Inhalt die eigentlichen Daten.

Die geschützten persönlichen Daten 89 und die öffentlichen berufsbezogenen Daten 87 werden bevorzugt separat in eigenen Datenpools gespeichert. Die geschützten Daten liegen also vorzugsweise in einem geschützten Speicher 102 des Server-Systems 100. Die öffentlichen Daten liegen vorzugsweise in einem öffentlichen Speicher 103 des Server-Systems 100.

Einige Angaben können beim Verfassen einer Suchanfrage bzw. bei der Eingabe der Daten in das System mehrfach erfasst werden. Beispielsweise können mehrere Qualifikationen erfasst werden. Die entsprechenden Felder weisen dabei einen Zähler auf. Folgende Tabelle 3 zeigt exemplarisch eine Übersicht von Angaben, welche mehrfach erfasst werden können.

**Tabelle 3**

| Feldkurzbezeichnung | Feldzähler | Inhalt |
|---|---|---|
| QU[] | QUz | Anzahl der Qualifikationen |
| WBn[] | WBz | Anzahl der Weiterbildungen |
| BWp[] | BPz | Anzahl der durchgeführten Projekte |
| BKr[] | BKz | Anzahl der Kundenreferenzen (Selbstständiger)/Zeugnisse (Angestellter) |

Im Folgenden wird gemäß einem Ausführungsbeispiel der vorliegenden Erfindung die Unterteilung der berufsbezogenen Daten 87 in den Wissensschlüssel 83 und den Signatur-Code 85 näher erläutert. Der Wissensschlüssel 83 liegt dabei in einem über die Datenlogik 81 generierten Format vor. Eine Übersicht über möglichen enthaltenen Daten zeigt die folgende Tabelle 4.

**Tabelle 4**

| Feldkurzbezeichnung | Feld | Inhalt |
|---|---|---|
| Be[] | e3_Beruf | Maler, Programmierer, Friseur |
| BS[] | e3_Beruf_Schwerpunkt | SAP, C++, Trendfrisuren |
| SA[] oder SB[] oder SC[] | | Signatur-Code |
| Bt[] | e1_Berufstatus | Berufsstatus (Angestellter, Selbstständiger, Rentner, Student,...) |
| js[] | e1_obstat | Job Markt Status (verfügbar/nicht verfügbar) |
| jss[] | e1_obstat_suche | Jobstatus Suche (Angestellter, Arbeiter, 400€ Job, ..) |

In Zeile 3 der obigen Tabelle ist der Signatur-Code 85 eingebettet. Dieser kann sich je nach Gruppe unterscheiden. Mögliche Gruppen sind z.B. Arbeiter, Angestellter und Selbstständiger. Diese Unterscheidung der Gruppen ermöglicht eine spezialisierte Ausprägung der enthaltenen Angaben. Die folgende Tabelle 5 zeigt beispielhaft mögliche Ausprägungen.

**Tabelle 5**

| Gruppe | Ausprägung |
|---|---|
| Arbeiter | Abschluss einer Berufsausbildung<br>Anzahl der Berufsjahre<br>Anzahl der Weiterbildungen<br>Anzahl der speziellen Qualifikationen<br>Anzahl der Arbeitszeugnisse |
| Angestellte(r) | Abschluss einer Berufsausbildung<br>Anzahl der Berufsjahre<br>Anzahl der Weiterbildungen<br>Anzahl der speziellen Qualifikationen<br>Anzahl durchgeführter Projekte<br>Anzahl der Angestellten Zeugnisse |
| Selbstständige(r) | Abschluss einer Berufsausbildung<br>Anzahl der Berufsjahre<br>Anzahl der Weiterbildungen<br>Anzahl der speziellen Qualifikationen<br>Anzahl durchgeführter Projekte<br>Anzahl der Kundenreferenzen |

Die folgende Tabelle 6 zeigt gemäß einer Ausführungsform der vorliegenden Erfindung ein Beispiel des Aufbaus des Signatur-Codes 85 eines Selbstständigen.

Tabelle 6

| Feldkurzbezeichnung | Feld | Inhalt |
|---|---|---|
| AU[] | e1_Ausbildung | Ausbildung ist ein optionales Kriterium bei der Erstellung des SC |
| Bej[] | e3_Beruf_weg_Jahre | Berufsjahre |
| Wbz[] | e6_Weiterbildung_Zaehler | Weiterbildungszähler |
| Quz[] | e5_Qualifikation_Zaehler | Qualifikationszähler |
| BPz[] | e6_Beruf_web_Projekt_zaehler | Projektzähler |
| BKz[] | e3_Beruf_weg_KD-Referenz_Zaehler | Kundenreferenz Zähler |

Im Folgenden wird gemäß einer Ausführungsform der vorliegenden Erfindung der Zusammenhang bzw. der gemeinsame Aufbau des Wissensschlüssels 83 und des Signatur-Codes 85 gezeigt:

$$\text{Wissensschlüssel} = Be[]+BS[]+SC[]+Bt[]+js[]+jss[]$$

Die +-Zeichen repräsentieren dabei logische Operatoren wie z.B. den Und-Operator. Das Feld SC repräsentiert den Signatur-Code 85. Dieser kann für einen Selbstständigen z.B. wie folgt aufgebaut sein:

$$SC = AU[]+Bej[]+Wbz[]+Quz[]+Bpz[]+Bkz[]$$

Auch hier repräsentieren die +-Zeichen logische Operatoren. Grundsätzlich ist die Verwendung aller bekannten logischer Operatoren möglich.

Um Suchanfragen möglichst klein zu halten, lässt sich deren Länge durch eine verkürzte Speicherung des Signatur-Codes 85 reduzieren. Die folgende Tabelle 7 zeigt ein Beispiel eines Signatur-Codes 85. Die Wertekombination der einzelnen Felder lässt sich z.B. auf den Wert SC29 abbilden. Eine andere Wertekombination könnte beispielsweise auf den Wert SC12 abgebildet werden. Zu Grunde liegt also beispielsweise eine vorgeschriebene Abbildungsvorschrift die bestimmten Wertekombinationen bestimmte verkürzte Zeichenketten (wie z.B. SC29 oder SC12) fest zuordnet.

**Tabelle 7**

| Feldkurzbezeichnung | Feld |
| --- | --- |
| AU[] | WENN E1_Ausbildung NICHT LEER > Krit1 = wahr |
| Bej[] | WENN e3_Beruf_weg_Jahre >10 <=15 DANN Krit2 = wahr |
| Wbz[] | WENN e6_Weiterbildung_Zaehler >=1 DANN Krit3 = wahr |
| Quz[] | WENN e5_Qualifikation_Zaehler > =2 DANN Krit3 = wahr |
| BPz[] | WENN e6_Beruf_web_Projekt_zaehler >=2 DANN Krit 5 = wahr |
| BKz[] | e3_Beruf_weg_KD-Referenz_Zaehler >=1 DANN Krit 6 = wahr |

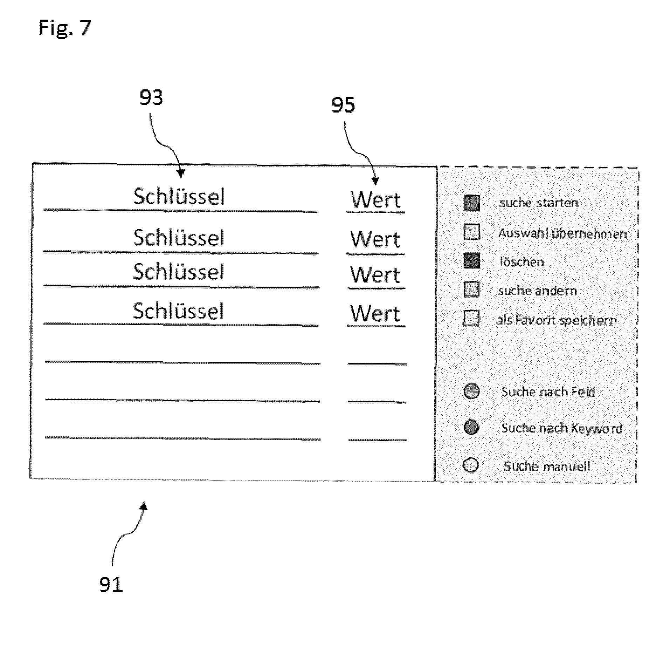

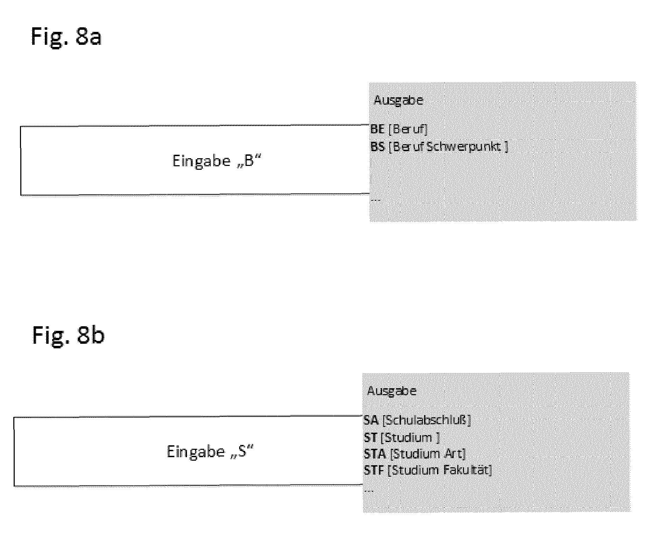

Fig. 7 zeigt gemäß einem Ausführungsbeispiel der vorliegenden Erfindung wie mittels einer Anzeige 91 eines Smartphones, eines Laptops oder eines PCs etc. Suchanfragen und / oder Stellengesuche und / oder Stellenausschreibungen basierend auf dem erfindungsgemäßen Format formuliert werden. Dabei kommen dynamische Schlüssel-Wert-Felder zum Einsatz. Die Schlüssel 93 werden dabei folgendermaßen gebildet: Ein Benutzer gibt mindestens einen Buchstaben in ein dafür vorgesehenen Bereich ein. Auf Basis dieses Buchstabens bzw. der mehreren Buchstaben schlägt das Benutzerendgerät 101 passende Schlüssel vor. Zugehörige Beispiele zeigen Fig. 8a und Fig. 8b. Gemäß dem Ausführungsbeispiel der Fig. 8a gibt der Benutzer den Buchstaben B ein, woraufhin das Benutzerendgerät 101 beispielsweise die Schlüssel Beruf oder Berufsschwerpunkt etc. vorschlägt. Durch Klicken kann der Benutzer dann einen der vorgeschlagenen Begriffe wählen. Fig. 8b zeigt ein ähnliches Beispiel. Im Unterschied zum vorherigen Beispiel gibt der Benutzer hier aber den Buchstaben S ein. Entsprechend werden ihm Begriffe wie Schulabschluss oder Studium etc. vorgeschlagen. Wählt der Benutzer, z.B. mittels Klick, einen der Begriffe aus, so wird dem Schlüssel-Wert-Feld entsprechender Begriff als Schlüssel 93 zugeordnet.

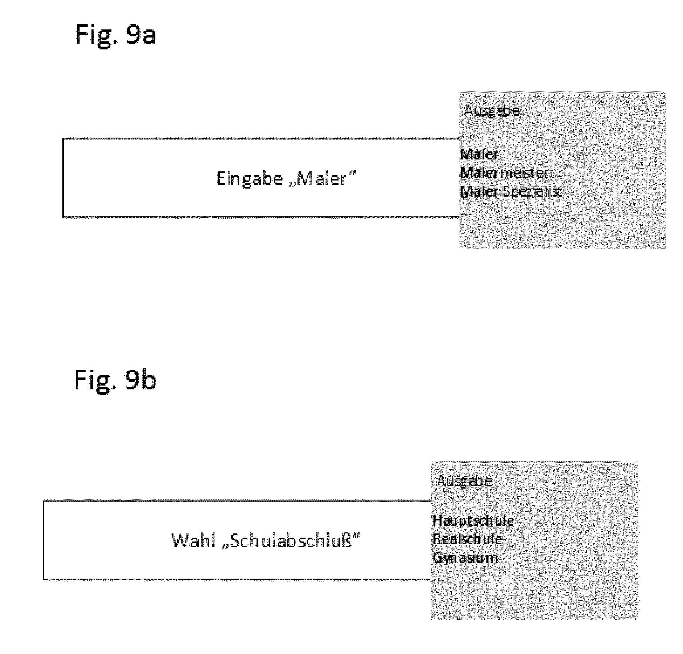

Dasselbe Prinzip liegt der Wahl des Wertes eines Schlüssel-Wert-Feldes zu Grunde. Hat der Benutzer einen Schlüssel 93 gewählt, so kann das Benutzerendgerät 101 bereits ohne eine Eingabe des Benutzers passende Begriffe für den Wert 93 des Schlüssel-Wert-Feldes vorschlagen. Möglich ist aber auch, dass der Benutzer erneut zumindest einen Buchstaben eingibt und aufgrund dessen die durch das Benutzerendgerät 101 vorgeschlagenen Begriffe einschränkt. Entsprechende Beispiele sind in Fig. 9a und Fig. 9b gezeigt. Das Beispiel in Fig. 9a zeigt die Eingabe des Begriffs Maler als möglichen Wert 93. Das Benutzerendgerät 101 schlägt auf Basis dessen z.B. weitere Begriffe wie Malermeister oder Malerspezialist vor, die dann wie oben beschrieben selektiert werden können. Fig. 9b zeigt ein Beispiel in welchem als Schlüssel 91 der Begriff Schulabschluss gewählt wurde. Aufgrund dessen schlägt das Benutzerendgerät 101, ohne eine weitere Eingabe des Benutzers, Begriffe wie Hauptschule, Realschule oder Gymnasium etc. vor.

Eine derartige dynamisch anpassbare Ausgestaltung der Anzeige 91 bzw. der Schlüssel-Wert-Felder ermöglicht eine optimale Platzausnutzung der Bildschirmfläche von kleinen Eingabegeräten, wie z.B. Smartphones etc.

Gemäß einem weiteren Ausführungsbeispiel der vorliegenden Erfindung können verfasste Suchanfragen gespeichert werden und für spätere Suchen erneut verwendet werden. Dabei kann die Suchanfrage als Ganzes oder teilweise gespeichert werden. Eine gespeicherte Suchanfrage kann somit erneut geladen und auch modifiziert werden.

Gemäß einem weiteren Ausführungsbeispiel der vorliegenden Erfindung enthält eine Suchanfrage drei weitere Felder, wie in nachfolgende Tabelle 8 aufgeführt.

Tabelle 8

| | |
|---|---|
| SuchNr | Mit Absetzen einer Suchanfrage wird eine SuchNr generiert |
| MemberID | Die MemberID ist der Primärschlüssel des Anwenders. Dieser wird der Suche hinzugefügt |
| HitNr | Die HitNr ist ein feldbezogener Zähler der pro Suchauftrag generiert wird. Der Zähler wird um 1 addiert, wenn der Feldsuchwert wahr ist. Die MemberID mit der höchsten HitNr steht im Ranking der Suchfolge auf 1. |

Das Feld SuchNr dient als Identifikation eine Suchanfrage. Das Feld MemberID identifiziert den Benutzer der die Suchanfrage generiert hat. Das Feld HitNr ist ein Zähler der die Qualität der Suchergebnisse repräsentiert, wie in folgendem Beispiel beschrieben wird:

Wird beispielsweise eine Suchanfrage

## BE[Maler]; TI[Meister];BA10;Ort[München]

zum Auffinden von Malern mit Meistertitel in München mit 10 Jahren Berufserfahrung formuliert, so könnten beispielsweise folgende Stellenausschreibungen (siehe folgende Tabelle 9) gefunden und gemäß der HitNr sortiert dargestellt werden.

Tabelle 9

| Person | Maler HitNr | Meister HitNr | 10J Erfa HitNr | München HitNr | Summe HitNr |
|---|---|---|---|---|---|
| Person 1 | 1 | 1 | 1 | 1 | 4 |
| Person 2 | 1 | 1 | 0 | 0 | 2 |
| Person 3 | 1 | 0 | 0 | 1 | 2 |

Dabei ist Summe der HitNr für Person 1 der oben dargestellten Tabelle am größten und repräsentiert somit das am besten zu der Suchanfrage passende Ergebnis. Person 2 und Person 3 werden erst darauffolgend gelistet, da hier die HitNr niedriger ist.

Im folgenden Beispiel wird die zugehörige Logik zur Bildung der HitNr dargestellt:

WENN BE[Maler] = [MEMBERID[Person 1], BE[Maler]] TRUE DANN

HITNr = HITNr +1

WENN BE[Maler] = [MEMBERID[Person 2], BE[Maler]] TRUE DANN

HITNr = HITNr +1

..

WENN TI[Meister] = [MEMBERID[Person 1], TI[Meister]] TRUE

DANN HITNr = HITNr +1

WENN TI[Meister] = [MEMBERID[Person 2], TI[Meister]] TRUE

DANN HITNr = HITNr +1

..

WENN BA10 = [MEMBERID[Person 1], BA10] TRUE DANN HITNr =

HITNr +1

WENN BA10 = [MEMBERID[Person 2], BA10] TRUE DANN HITNr =

HITNr +1

..

Gemäß dem obigen Beispiel wird also HitNr inkrementiert, wenn ein entsprechendes Suchkriterium mit einem aufgefundenen Datensatz übereinstimmt.

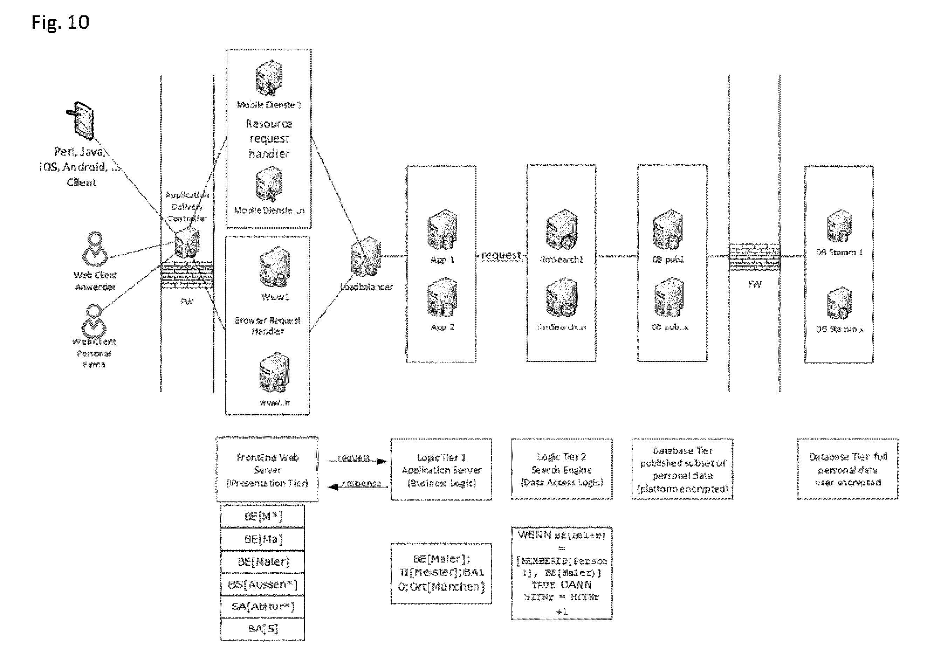

Gemäß einem weiteren Ausführungsbeispiel der vorliegenden Erfindung wird in Fig. 10 eine Systemarchitektur zum Aufbau des Gesamtsystems gezeigt. Suchanfragen, Stellengesuche und / oder Stellenausschreibungen können von einem Benutzer (Anwender) an einen Firewallgeschützten Application Delivery Controller gerichtet werden. Entsprechende Anfragen werden durch Resource Request Handler und Browser Request Handler abgearbeitet und an einen Load Balancer weitergeleitet. Die Anfrage wird daraufhin an Application Server weitergereicht und durch eine oder mehrere Suchmaschinen abgearbeitet. Das zugehörige Suchverfahren, zum Verarbeiten der erfindungsgemäßen Suchanfragen nennt sich iimSearch. Verarbeitete Suchanfragen werden an Datenbanken weitergeleitet. Die erste Datenbankart enthält die berufsbezogenen Daten 87, die aus Sicherheitsgründen verschlüsselt vorliegen können. Die zweite Datenbankart befindet sich bevorzugt hinter einer Firewall FW und speichert die geschützten Daten 89, die ebenfalls verschlüsselt vorliegen können.

Im Folgenden werden gemäß einem Ausführungsbeispiel der vorliegenden Erfindung einige Praxisbeispiele zum Auffinden bestimmter Stellengesuche und / oder Stellenausschreibungen gezeigt:

*Beispiel 1:*

Suche alle Personen, die von Beruf Maler sind und aus München kommen.
Be[Maler]; Ort[Muenchen]

*Beispiel 2:*

Suche alle Personen, die von Beruf KFZ-Mechaniker sind mit den Schwerpunkten BMW und Mercedes und aus München kommen.
Be[KFZ Mechaniker]; BS[BMW UND Mercedes]; Ort[München]

*Beispiel 3:*

Suche einen Projektleiter, Schwerpunkt Transition, Migrationen, 10 Jahre Erfahrung, 5 Kundenreferenzen, 2 Weiterbildungen, verfügbar in Hamburg.

Be[Projektleiter]; BS[Transition UND Migrationen];SC36;ver[j];Ort[Hamburg]

*Beispiel 4:*

Suche einen SAP-Spezialisten mit Modul FI und MM, 5 Jahre Erfahrung, 2 durchgeführte Projekte und mindestens einer Kundenreferenz.
Be[SAP]; BS[FI UND MM];SC18

*Beispiel 5:*

Suche einen Rechtsanwalt mit Schwerpunkt Informatik und Patentrecht, 5 Jahre Erfahrung, wohnhaft in München und verfügbar.
Be[Rechtsanwalt]; BS[Verkehrsrecht UND Patent];SA5; Ort[Muenchen];ver[j]
Die hier vorgestellten Konzepte zum Speichern und Suchen von Stellenausschreibungen und / oder Stellengesuchen können auch auf andere Datenbestände angewendet werden. Möglich ist z.B. eine Anwendung im Bereich von Partnerbörsen etc.

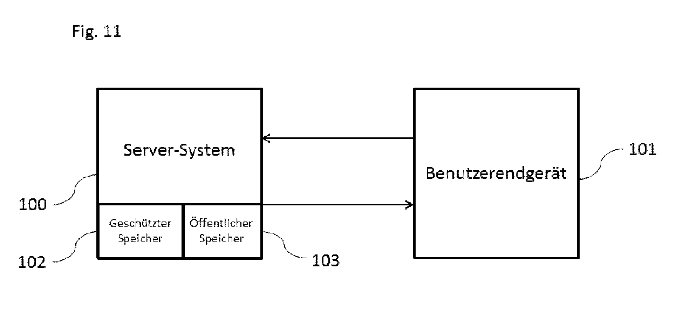

Fig. 11 zeigt gemäß einem Ausführungsbeispiel ein Server-System 100 und ein Benutzerendgerät 101 der Erfindung und spiegelt einen möglichen Aufbau des Gesamtsystems wieder. Das Server-System 100 beinhaltet dabei in der gezeigten Ausführungsform einen geschützten Speicher 102 und einen öffentlichen Speicher 103.

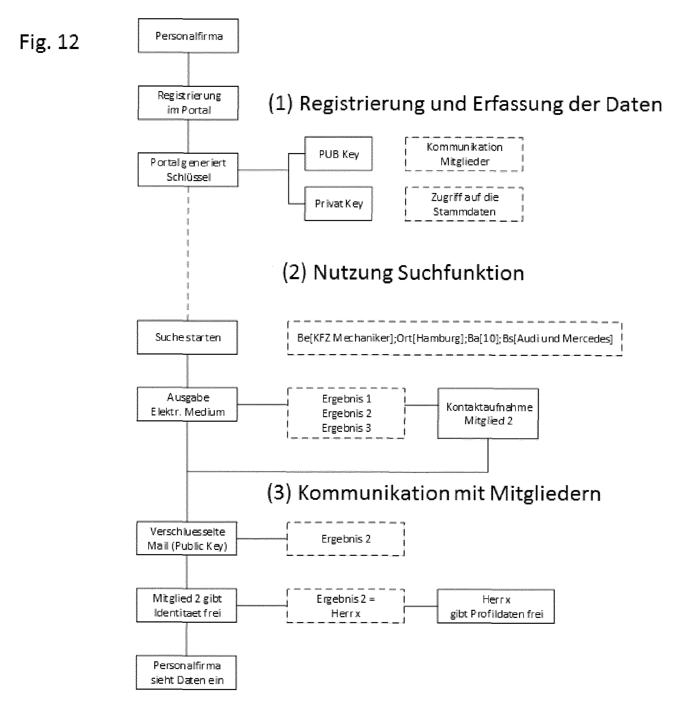

Fig. 12 zeigt ein Implementierungsbeispiel der vorliegenden Erfindung:

(1) Registrierung & Erfassung

- A) Die Firma hinterlegt seine Stammdaten

- B) Die Firma stellt sich vor

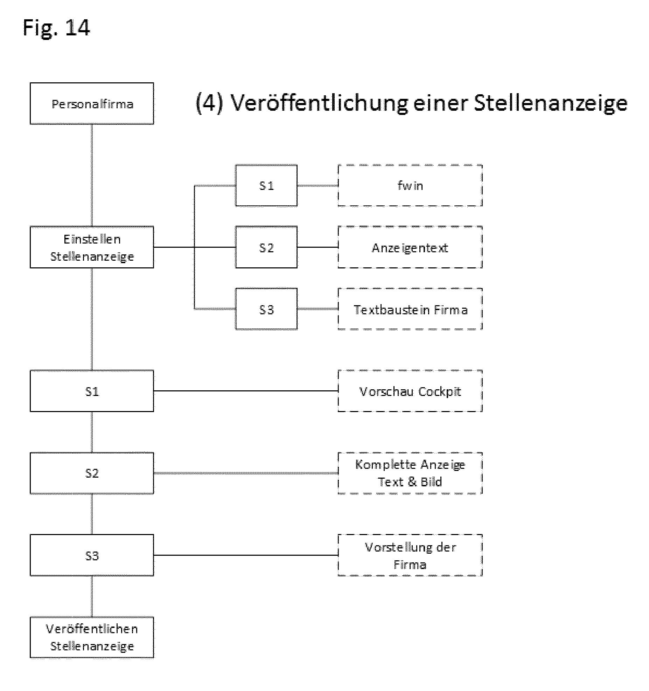

- Aus A) und B) wird ein Textbaustein erstellt, der bei der Veröffentlichung einer Stellenanzeige bei dem Punkt S3 (siehe Figur 14) eingefügt wird

- Mit der Registrierung werden für eine Firma 2 Keys erstellt

    ◦ Key 1 - Public Key zur verschlüsselten Kommunikation innerhalb des Portals mit allen Mitgliedern

    ◦ Key 2 - Private Key zur Änderungen der verschlüsselten Stammdaten einer Firma / Anwender

(2) Nutzung der Suchfunktion (iimS)

Mit Aktivierung von Key 1 und 2 unter (1) kann eine Firma alle Funktionen des Portals nutzen unter Berücksichtigung der Member Art (Free Account, Pro Account, Max Account).
Mit der Nutzung eines Free Account kann jeder Member die Suchfunktion wie folgt nutzen:

- Eine Firma kann nach Personal suchen, d.h. mit Hilfe der Syntax wsyn (workroom syntax) kann der Dienst iims (intelligent indexed multiple search) eine SSM auf ein Device der Wahl versenden.

Bsp. 1:

Medium : Desktop
Anforderung : Suche alle ITIL Spezialisten (Angestellter) mit Schwerpunkt Incident & Change Management, 7J Erfahrung, 2 Projekte in Hamburg und verfügbar

Eingabe : Be[EDV Spezialist], BS[Incident Management und/oder Change Management], SA7, Ort[Hamburg]; ver,[j]

Bsp. 2:

Medium : Smartphone

Anforderung : Suche alle KFZ Mechaniker (Angestellter) mit Schwerpunkt Karosseriebau und BMW, 15J Erfahrung, 2 Qualifikationen, 2 Weiterbildungen in Schleswig Holstein und verfügbar ab 01.01.15 Eingabe : Be[KFZ Mechaniker], BS[Karosseriebau und BMW], SA15, Reg[Schleswig Holstein]; vd[01.01.2015]

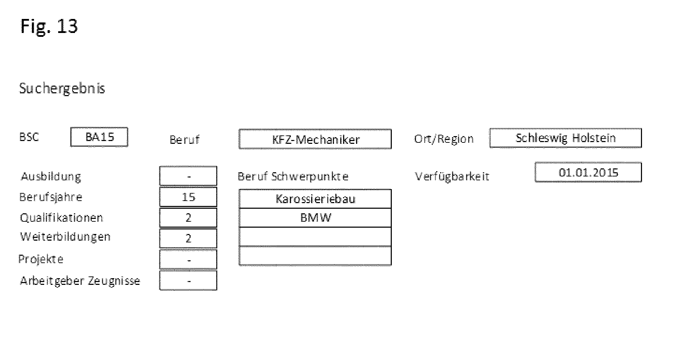

Figur 13 zeigt beispielhaft ein Suchergebnis gemäß dem obigen Implementierungsbeispiels:

(3) Kommunikation mit Mitgliedern innerhalb des Portals

Die Kommunikation mit einem Member des Portals (Firma, Spezialist, Administration) erfolgt immer verschlüsselt. Eine Firma, die den Kontakt zu einem Suchergebnis herstellt, kann die folgenden Informationen sehen. Je nach gebuchten Account lassen sich in den Ergebnissen weitere Informationen abrufen. Eine Firma x kann über das Suchergebnis die Kommunikation zum Wissensinhaber oder Arbeitssuchenden herstellen.

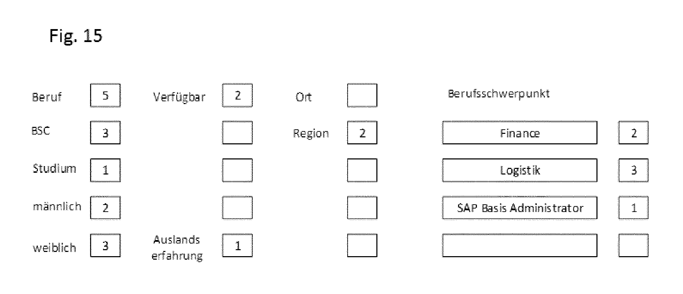

Figuren 14 und 15 zeigen beispielhaft ein die Veröffentlichung einer Stellenanzeige und ein Cockpit gemäß dem obigen Implementierungsbeispiels:

(4) Veröffentlichung einer Stellenanzeige

Ziel:

Eine Firma kann eine Stellenanzeige einstellen und bekommt vor der Veröffentlichung dieser Anzeige umfassende Ergebnisse auf Basis der eingestellten Kriterien über die Funktion/Dienst fwin (fastwin)

Mit Veröffentlichung der kostenpflichtigen Anzeige wird diese für einen Member automatisch sichtbar, wenn die Suchkriterien (1) dem PQK (Personal Qualification Key) des Anwenders entsprechen.

Mit Veröffentlichung der kostenpflichtigen Anzeige werden die im Cockpit erhalten Ergebnisse für die Firma x sichtbar. Eine Kontaktaufnahme zu den Suchergebnissen ist jetzt möglich.

Aufbau einer Stellenanzeige

Eine Stellenanzeige besteht aus 3 Teilen

Teil 1

Die Nutzung der Suchfunktion iims und die Ausgabe der Ergebnisse für fwin über ein Cockpit.

Vorteile

Für eine Stellenanzeige kann eine Firma das Maximum an Verfügbarkeit von Ressourcen rausholen, bevor diese Anzeige veröffentlicht wird.

Beispiel fwin

Eine Firma x in Kiel sucht SAP Spezialisten mit den Schwerpunkten Finance, Logistik sowie SAP Basis Administrator. Der Kandidat(in) soll 10 Jahre Berufserfahrung mitbringen, 2 Weiterbildungen in den Schwerpunkten, min 1 Zeugnis hierzu sollte vorliegen. Der Wunschkandidat soll aus dem norddeutschen Bereich kommen und ab 01.03.15 verfügbar sein.

Suchstring (iims)

Be[SAP Spezialist]; BS[Finance UND Logistik UND SAP Basis Administrator]; BA12; Reg[Schleswig Holstein];ver[01.03.2015]

In diesem Beispiel werden alle Berufsschwerpunkte nur von einer Person erfüllt. Drei Personen verfügen über

**15**

die erforderliche Berufserfahrung (BA12).

Mit Änderung des Suchstrings (iims) verändern sich die Ergebnisse im Cockpit. Firma x kann auf diese Weise die Anforderung auf ein Maximum ausbalancieren, um die besten Ergebnisse zu erhalten.

Teil 2

Hinterlegung der Anzeigen Inhalte im Klartext sowie Option zur Integration von Bild und Text (entspricht einer klassischen Anzeige mit Text und multimedialer Anreicherung)

Teil 3

Vorstellung der Firma, welche bereits in den Stammdaten hinterlegt ist und nur abgerufen werden muss.


**Patentansprüche**

1. Ein Server-System (100) zum Durchsuchen von Stellenausschreibungen und / oder Stellengesuchen, aufweisend:

   a. eine Schnittstelle zum Empfangen zumindest einer Suchanfrage von zumindest einem Benutzerendgerät (101), wobei die zumindest eine Suchanfrage in einem strukturierten Format aufgebaut ist, welches zumindest einen logischen Operator aufweist und alle für ein Durchsuchen der Stellenausschreibungen und / oder Stellengesuche notwendigen Informationen in einer einzigen Zeichenkette enthält; und
   b. zumindest ein Speichersystem zum Speichern der Stellenausschreibungen und / oder Stellengesuche in einem strukturierten Format, sodass das strukturierte Format der zumindest einen Suchanfrage direkt auf das strukturierte Format der Stellenausschreibungen und / oder Stellengesuche abgebildet werden kann.

2. Ein Server-System (100) nach Anspruch 1, wobei die zumindest eine Suchanfrage und / oder die Stellenausschreibungen und / oder die Stellengesuche aufweisen:

   - einen Wissensschlüssel (83) zum Definieren von zumindest einer Berufsangabe, und / oder
   - einen Signatur-Code (85) zum Definieren von zumindest einer bildungsrelevanten Angabe.

3. Ein Server-System (100) nach Anspruch 2, wobei der Signatur-Code (85) eine Mehrzahl von bildungsrelevanten Angaben auf einen einzigen Wert abbildet.

4. Ein Server-System (100) nach Anspruch 2 oder 3, wobei der Signatur-Code (85) in dem Wissensschlüssel (83) enthalten ist.

5. Ein Server-System (100) nach einem der vorhergehenden Ansprüche, wobei das Speichersystem aufweist:

   - einen geschützten Speicher (102) zum Speichern von persönlichen Daten (89), und
   - einen öffentlichen Speicher (103) zum Speichern von berufsbezogenen Daten (87).

6. Ein Server-System (100) nach Anspruch 5, wobei die Schnittstelle eingerichtet ist, in Antwort auf die empfangene zumindest eine Suchanfrage die berufsbezogenen Daten (87) passender Stellenausschreibungen und / oder passender Stellengesuche auszugeben und die persönlichen Daten (89) der Stellenausschreibungen und / oder Stellengesuche aus dem geschützten Speicher erst auszugeben, wenn eine Autorisierung (25, 45, 65) durchgeführt wurde.

7. Ein Benutzerendgerät (101) zum Durchsuchen von Stellenausschreibungen und / oder Stellengesuchen, aufweisend:

   a. eine grafische Oberfläche zum Erstellen zumindest einer Suchanfrage, wobei die zumindest eine Suchanfrage in einem strukturierten Format aufgebaut ist, welches zumindest einen logischen Operator aufweist und alle für ein Durchsuchen der Stellenausschreibungen und/oder Stellengesuche notwendigen Informationen in einer einzigen Zeichenkette enthält; und
   b. eine Schnittstelle zum Übermitteln der zumindest einen Suchanfrage an ein Server-System (100), vorzugsweise an ein Server-System (100) gemäß einem der Ansprüche 1-6.

**8.** Ein Benutzerendgerät (101) nach Anspruch 7,
wobei die grafische Oberfläche zumindest ein Schlüssel-Wert-Feld zur Eingabe von Daten für einen Wissensschlüssel (83) und / oder von Daten für einen Signatur-Code (85) aufweist.

**9.** Ein Benutzerendgerät (101) nach Anspruch 8, wobei
der Schlüssel (93) des zumindest einen Schlüssel-Wert-Feldes durch Eingabe eines Schlüssels (93) gebildet wird, wobei nach Eingabe eines oder mehrerer Zeichen ein entsprechender Schlüssel (93) automatisch vorgeschlagen wird, und / oder
der Wert (95) des zumindest einen Schlüssel-Wert-Feldes durch Eingabe eines Wertes (95) gebildet wird, wobei nach Eingabe eines oder mehrerer Zeichen ein entsprechender Wert (95) automatisch vorgeschlagen wird.

**10.** Ein Benutzerendgerät (101) nach einem der Ansprüche 7-9, wobei die erstellte zumindest eine Suchanfrage ganz oder teilweise in dem Benutzerendgerät (101) gespeichert wird.

**11.** Ein Benutzerendgerät (101) nach einem der Ansprüche 7-10, wobei während der Erstellung der zumindest einen Suchanfrage bereits Stellenausschreibungen und / oder Stellengesuche, passend zu bereits eingegebenen Angaben während der Erstellung der zumindest einen Suchanfrage angezeigt werden.

**12.** Ein System zum Durchsuchen von Stellenausschreibungen und / oder Stellengesuchen, aufweisend ein Server-System (100) nach einem der Ansprüche 1-6 und zumindest ein Benutzerendgerät (101) nach einem der Ansprüche 7-11.

**13.** Ein Verfahren zum Betrieb eines Server-Systems (100) gemäß einem der Ansprüche 1-6.

**14.** Ein Verfahren zum Betrieb eines Benutzerendgeräts (101) gemäß einem der Ansprüche 7-11.

**15.** Ein Computerprogramm, aufweisend Instruktionen zur Ausführung eines Verfahrens nach Anspruch 13 oder 14.

Fig. 1

Ablauf gemäß Stand der Technik:
Stellenausschreibung einer Firma

1 — Firma verfasst Stellenaus- schreibung

3 — Stellenaus- schreibung in Jobbörse einstellen

5 — Warten auf Rückmeldung von Bewerbern

7 — Auswertung der Rückmeldungen

9 — Geeignete Bewerber einladen

11 — Bewerbungs- gespräche führen

13 — Einstellung

Fig. 2

Stellenausschreibung einer Firma

21 — Firma gibt Angaben für Stellenausschreibung ein

zeitgleich

23 — Suchergebnisse auf Basis berufsbezogener Daten liefern

25 — Autorisierung

27 — Stellenausschreibung in Jobbörse einstellen

29 — Warten auf Rückmeldung von Bewerbern

31 — Auswertung der Rückmeldungen

33 — Geeignete Bewerber einladen

35 — Bewerbungsgespräche führen

37 — Einstellung

Fig. 3a

Personalvermittlungsfirma sucht passende Kandidaten

41 — Personal-vermittlungs-firma gibt Angaben für Suchanfrage ein

zeitgleich

43 — Suchergebnisse auf Basis berufsbezogener Daten liefern

45 — Autorisierung

47 — Geschützte Daten werden sichtbar

49 — Bewerber kontaktieren

51 — Auswertung

53 — Geeignete Bewerber an suchende Firma empfehlen

55 — Firma führt Bewerbungs-gespräche

57 — Einstellung

Fig. 3b

Personalvermittlungsfirma sucht
passende Kandidaten

```
42 ─┐   ┌──────────────────┐
    │   │   Personal-       │
    │   │   vermittlungs-   │
zeitgleich│ firma registriert│◄──┐
    │   │   sich in Portal  │   │
    │   └──────────────────┘   │
    │          │               │
    │   ┌──────────────────┐   │
    │   │  Portal erzeugt   │   │
    │   │  privaten und     │   │
44 ─┘   │  öffentlichen     │───┘
        │  Schlüssel        │
        └──────────────────┘
               │
46 ─┐   ┌──────────────────┐
    │   │   Nutzung der     │
    │   │   Suchfunktion    │
        └──────────────────┘
               │
48 ─┐   ┌──────────────────┐
    │   │  Ausgabe von      │
    │   │  Suchergebnissen  │
    │   │  auf              │
    │   │  elektronischem   │
        │  Medium           │
        └──────────────────┘
               │
50 ─┐   ┌──────────────────┐
    │   │   Bewerber        │
    │   │ kontaktieren durch│
    │   │ verschl. Mail     │
        │ (öffentl. Schlüssel)│
        └──────────────────┘
```

Kontaktierter
Bewerber gibt
Identität frei    ─ 52

Personalvermittlungsfirma sieht Daten
ein    ─ 54

# Fig. 3c

**Suchanforderung (Arbeitgeber/Headhunter/Personalfirma..)**

Eine Firma x in Kiel sucht einen freiberuflichen(in) SAP Spezialisten mit den Schwerpunkten Finance, Logistik sowie SAP Basis Administration. Der Kandidat(in) soll 10 Jahre Berufserfahrung mitbringen, 2 Weiterbildungen und 2 Qualifikaitonen vorweisen können und min 2 Kundenreferenzen. Der Wunschkandidat(in) soll aus dem norddeutschen Bereich kommen und ab 01.03.15 verfügbar sein.

**Suchstring**

Be[SAP Spezialist];BS[Finance, Logistik, SAP Basis Administration]; SC[10], Reg[Schleswig Holstein], ver[01.03.2015]

**Cockpit Ergebnisse**

| Beruf | 5 | Verfügbar | 2 | Ort | | Berufsschwerpunkt | |
|---|---|---|---|---|---|---|---|
| BSC | 3 | | | Region | 2 | Finance | 2 |
| Studium | 1 | | | | | Logistik | 3 |
| männlich | 2 | | | | | SAP Basis Administrator | 1 |
| weiblich | 3 | Auslands erfahrung | 1 | | | | |

**Anzeige einstellen**    J/N

**Ergebnisse abrufen**

Bsp. weiblich. Unter Such Einzel Ergebnis werden Einzelergebnisse auf Basis „weiblich (3)" angezeigt

**Fig. 3d**

| Beruf | 5 | Verfügbar | 2 | Ort | | Berufsschwerpunkt | |
|---|---|---|---|---|---|---|---|
| BSC | 3 | | | Region | 2 | Finance | 2 |
| Studium | 1 | | | | | Logistik | 3 |
| männlich | 2 | | | | | SAP Basis Administrator | 1 |
| weiblich | 3 | Auslands erfahrung | 1 | | | | |

**Einzel Ergebnis 1**

Nach einstellen der Anzeige können
Einzelergebnisse angerufen werden

| | | | |
|---|---|---|---|
| Verfügbarkeit | 01.03.2015 | Ort/Region | Schleswig Holstein |
| Beruf | SAP Spezialist | Beruf Schwerpunkte | Finance |
| | | | Logistik |
| | | | SAP Basis Administrator |
| BSC | BA15 | Geschlecht | W |
| Ausbildung | - | | |
| Berufsjahre | 15 | | |

| | | | | | | | |
|---|---|---|---|---|---|---|---|
| Qualifikationen | 2 | SAP Spezialist Modul 1 | | SAP Spezialist Modul 2 | | | |
| Weiterbildungen | 2 | SAP Training 1 | | SAP Training 2 | | | |
| Projekte | | Projekt 1 | Jahr | 2005 | Dauer | 24M | |
| | | Projekt 2 | Jahr | 2007 | Dauer | 12M | |
| | | Projekt 3 | Jahr | 2008 | Dauer | 18M | |
| Referenzen | 2 | | | | | | |

## Fig. 3e

### Suchanforderung (Arbeitnehmer, Selbstständiger)

Ein Energieanlagen Elektroniker in FFM sucht ab 01.01.15 eine neue Herausforderung als Angestellter in seinem Beruf mit den Schwerpunkten Starkstrom, LED Technik und Solar. Neben einer Berufserfahrung von 10J sind Nachweise von 2 Weiterbildungen, 2 Qualifikationen und 2 Arbeitgeber Zeugnissen gegeben.

### Suchstring

Be[Energieanlagenelektroniker];BS[Starkstrom, LED, Solar]; SA[10], Ort[FFM], ver[01.01.2015]

### Cockpit Ergebnisse

Persönliche Qualifikationen passend zu Stellenausschreibungen (PQK)    100% [ 3 ]    80% [ 5 ]    60% [ 8 ]

| Ort | FFM | 10 | Berufschwerpunkt | |
|---|---|---|---|---|
| Im Umkreis 100 KM | | 15 | Starkstrom | 5 |
| Im Umkreis 250 KM | | 20 | Solar | 3 |
| | | | LED Technik | 1 |

TOP 5 Ergebnisse

| Firma A | PQK | 100% | Beginn | 01.01.2015 | Art der Anstellung | Fest |
|---|---|---|---|---|---|---|
| Firma B | PQK | 100% | Beginn | 01.01.2015 | Art der Anstellung | Fest |
| Firma C | PQK | 100% | Beginn | 01.01.2015 | Art der Anstellung | Fest |
| Firma D | PQK | 80% | Beginn | 01.02.2015 | Art der Anstellung | Fest |
| Firma D | PQK | 80% | Beginn | 01.01.2015 | Art der Anstellung | Contract |

### Ergebnisse abrufen

Bsp. Firma C. Unter Such Einzel Ergebnis werden Einzelergebnisse auf Basis „Firma C" angezeigt

# Fig. 3f

**Einzel(Stellenanzeige)**

| | 2 | 3 |

1

Kurzform der Stellenanzeige

2

Stellenanzeige im Detail

3

Firmen Profil

Fig. 4                                    Stellensuche eines Arbeitssuchenden

61 — Arbeitssuchender
gibt Angaben für
Suchanfrage ein

63 — Suchergebnisse
auf Basis
berufsbezogener
Daten liefern

zeitgleich

65 — Autorisierung

67 — Geschützte
Daten werden
sichtbar

69 — Bewerben

71 — Warten auf
Rückmeldung
von Firmen

73 — Auswertung der
Rückmeldungen

75 — Bewerbungsgespräche führen

77 — Einstellung

Fig. 5a

Fig. 5b

Fig. 6

Name
Vorname
Telefon
Mail
Anrede
Beruf
Akademischer Grad
Qualifikationen
Berufsstatus
Ort
PLZ
Verfügbarkeit
Berufsschwerpunkt
Weiterbildung

| BE[] | Beruf |
| GR[] | Akademischer Grad |
| QU[] | Qualifikationen |
| BT[] | Berufsstatus |
| Ort[] | Ort |
| PLZ[] | PLZ |
| JS[] | Verfügbarkeit |
| BS[] | Berufsschwerpunkt |
| WBn[] | Weiterbildung |

EP 3 046 059 A1

Fig. 7

93          95

| Schlüssel | Wert | ■ suche starten |
|-----------|------|-----------------|
| Schlüssel | Wert | ☐ Auswahl übernehmen |
| Schlüssel | Wert | ■ löschen |
| Schlüssel | Wert | ▦ suche ändern |
|           |      | ☐ als Favorit speichern |

◯ Suche nach Feld

● Suche nach Keyword

◯ Suche manuell

91

# Fig. 8a

Eingabe „B"

Ausgabe

**BE** [Beruf]
**BS** [Beruf Schwerpunkt ]

...

# Fig. 8b

Eingabe „S"

Ausgabe

**SA** [Schulabschluß]
**ST** [Studium ]
**STA** [Studium Art]
**STF** [Studium Fakultät]

...

# Fig. 9a

Eingabe „Maler"

Ausgabe

**Maler**
**Maler meister**
**Maler Spezialist**
...

# Fig. 9b

Wahl „Schulabschluß"

Ausgabe

**Hauptschule**
**Realschule**
**Gynasium**
...

Fig. 10

| FrontEnd Web Server (Presentation Tier) | request → ← response | Logic Tier 1 Application Server (Business Logic) | Logic Tier 2 Search Engine (Data Access Logic) | Database Tier published subset of personal data (platform encrypted) | Database Tier full personal data user encrypted |

| BE[M*] |
| BE[Ma] |
| BE[Maler] |
| BS[Aussen*] |
| SA[Abitur*] |
| BA[5] |

BE[Maler];
TI[Meister];BA1
0;Ort[München]

WENN BE[Maler]
=
[MEMBERID[Person
1], BE[Maler]]
TRUE DANN
HITNr = HITNr
*1

Fig. 11

Server-System

Geschützter Speicher | Öffentlicher Speicher

Benutzerendgerät

100

102

103

101

**Fig. 12**

Personalfirma

Registrierung im Portal

## (1) Registrierung und Erfassung der Daten

Portal generiert Schlüssel

PUB Key

Privat Key

Kommunikation Mitglieder

Zugriff auf die Stammdaten

## (2) Nutzung Suchfunktion

Suche starten

Be[KFZ Mechaniker];Ort[Hamburg];Ba[10];Bs[Audi und Mercedes]

Ausgabe Elektr. Medium

Ergebnis 1
Ergebnis 2
Ergebnis 3

Kontaktaufnahme Mitglied 2

## (3) Kommunikation mit Mitgliedern

Verschluesselte Mail (Public Key)

Ergebnis 2

Mitglied 2 gibt Identitaet frei

Ergebnis 2 = Herr x

Herr x gibt Profildaten frei

Personalfirma sieht Daten ein

Fig. 13

Suchergebnis

| BSC | BA15 | | Beruf | KFZ-Mechaniker | | Ort/Region | Schleswig Holstein |

| Ausbildung | - | Beruf Schwerpunkte | | Verfügbarkeit | 01.01.2015 |
| Berufsjahre | 15 | Karossieriebau | | | |
| Qualifikationen | 2 | BMW | | | |
| Weiterbildungen | 2 | | | | |
| Projekte | - | | | | |
| Arbeitgeber Zeugnisse | - | | | | |

## Fig. 14

**(4) Veröffentlichung einer Stellenanzeige**

Fig. 15

| Beruf | 5 | Verfügbar | 2 | Ort | | Berufsschwerpunkt | |
|---|---|---|---|---|---|---|---|
| BSC | 3 | | | Region | 2 | Finance | 2 |
| Studium | 1 | | | | | Logistik | 3 |
| männlich | 2 | | | | | SAP Basis Administrator | 1 |
| weiblich | 3 | Auslands erfahrung | 1 | | | | |

## Fig. 16

```
┌─────────────────┐
│  Arbeitnehmer   │
└─────────────────┘
         │
┌─────────────────┐
│  Registrierung  │        (1) Registrierung und Erfassung der Daten
│   im Portal     │
└─────────────────┘
         │
┌─────────────────┐       ┌──────────────┐      ┌─ ─ ─ ─ ─ ─ ─ ─ ─┐
│ Portal generiert│───────│   PUB Key    │      │  Kommunikation  │
│    Schlüssel    │       └──────────────┘      │   Mitglieder    │
└─────────────────┘                             └─ ─ ─ ─ ─ ─ ─ ─ ─┘
         ¦               ┌──────────────┐      ┌─ ─ ─ ─ ─ ─ ─ ─ ─┐
         ¦               │  Privat Key  │      │ Zugriff auf die │
         ¦               └──────────────┘      │   Stammdaten    │
         ¦                                     └─ ─ ─ ─ ─ ─ ─ ─ ─┘
```

(2) Nutzung Suchfunktion

```
┌─────────────────┐       ┌─ ─ ─ ─ ─ ─ ─ ─ ─ ─ ─ ─ ─ ─ ─ ─ ─ ─ ─ ─ ─ ─ ─ ─ ─┐
│  Suche starten  │───────│ Be[KFZ Mechaniker];Ort[Hamburg];Ba[10];Bs[Audi und Mercedes] │
└─────────────────┘       └─ ─ ─ ─ ─ ─ ─ ─ ─ ─ ─ ─ ─ ─ ─ ─ ─ ─ ─ ─ ─ ─ ─ ─ ─┘
         │
┌─────────────────┐       ┌─ ─ ─ ─ ─ ─ ─ ─ ─┐
│     Ausgabe     │───────│ Ergebnis Firma x │
│  Elektr. Medium │       │ Ergebnis Firma y │
└─────────────────┘       │ Ergebnis Firma z │
                          └─ ─ ─ ─ ─ ─ ─ ─ ─┘
```

(3) Kommunikation mit Firmen

```
┌─────────────────┐
│ Kontaktaufnahme │
│   zu Firma x    │
└─────────────────┘                      ┌─ ─ ─ ─ ─ ─ ─ ─ ─┐
         │                               │ A) nur PUB Daten │
┌─────────────────┐                      └─ ─ ─ ─ ─ ─ ─ ─ ─┘
│ Verschluesselte │  Optionen  ┌─ ─ ─ ─ ─ ─ ─ ─ ─┐
│ Mail (Public Key)│──────────│ B) nur PUB + Persönl. │
└─────────────────┘            │      Daten       │
                               └─ ─ ─ ─ ─ ─ ─ ─ ─┘
                               ┌─ ─ ─ ─ ─ ─ ─ ─ ─┐
                               │     C) Alle      │
                               └─ ─ ─ ─ ─ ─ ─ ─ ─┘
```

**Europäisches Patentamt**
**European Patent Office**
**Office européen des brevets**

# EUROPÄISCHER RECHERCHENBERICHT

**Nummer der Anmeldung**

EP 15 15 1095

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/264657 A1 (HOFFMAN GEOFFREY D [US] ET AL) 27. Oktober 2011 (2011-10-27) * das ganze Dokument * ----- | 1-15 | INV. G06Q10/06 G06F17/30 |
| X | US 2008/275864 A1 (KIM BEN [US] ET AL) 6. November 2008 (2008-11-06) * das ganze Dokument * ----- | 1-15 | |
| X | US 2009/157523 A1 (JONES SCOTT A [US] ET AL) 18. Juni 2009 (2009-06-18) * das ganze Dokument * ----- | 1-15 | |
| X | US 2010/057728 A1 (QUICK WILLIAM M [US] ET AL) 4. März 2010 (2010-03-04) * das ganze Dokument * ----- | 1-15 | |
| A | US 2005/210042 A1 (GOEDKEN JAMES F [US]) 22. September 2005 (2005-09-22) * das ganze Dokument * ----- | 1-15 | |
| A | WO 01/63483 A2 (BELLIS JOSEPH L DE [US] DE BELLIS JOSEPH L [US]) 30. August 2001 (2001-08-30) * das ganze Dokument * ----- | 1-15 | RECHERCHIERTE SACHGEBIETE (IPC) G06Q G06F |
| A | US 2004/078374 A1 (HAMILTON DON MARLIN [US]) 22. April 2004 (2004-04-22) * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 8. Juli 2015 | Lutz, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 15 1095

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2015

| Im Recherchenbericht angeführtes Patentdokument | Datum der Veröffentlichung | Mitglied(er) der Patentfamilie | Datum der Veröffentlichung |
|---|---|---|---|
| US 2011264657 A1 | 27-10-2011 | US 2011264657 A1<br>US 2013212091 A1 | 27-10-2011<br>15-08-2013 |
| US 2008275864 A1 | 06-11-2008 | AU 2008247831 A1<br>CN 101675432 A<br>EP 2153354 A1<br>HK 1141878 A1<br>TW 200917068 A<br>US 2008275864 A1<br>WO 2008137395 A1 | 13-11-2008<br>17-03-2010<br>17-02-2010<br>30-05-2014<br>16-04-2009<br>06-11-2008<br>13-11-2008 |
| US 2009157523 A1 | 18-06-2009 | US 2009157523 A1<br>WO 2009076589 A1 | 18-06-2009<br>18-06-2009 |
| US 2010057728 A1 | 04-03-2010 | KEINE | |
| US 2005210042 A1 | 22-09-2005 | KEINE | |
| WO 0163483 A2 | 30-08-2001 | AU 5077801 A<br>EP 1415246 A2<br>US 6760720 B1<br>US 7574432 B1<br>US 2002046209 A1<br>US 2008059445 A1<br>WO 0163483 A2 | 03-09-2001<br>06-05-2004<br>06-07-2004<br>11-08-2009<br>18-04-2002<br>06-03-2008<br>30-08-2001 |
| US 2004078374 A1 | 22-04-2004 | CA 2436439 A1<br>US 2004078374 A1 | 02-02-2004<br>22-04-2004 |

EPO FORM P0461

Für nähere Einzelheiten zu diesem Anhang : siehe Amtsblatt des Europäischen Patentamts, Nr.12/82